(19) Europäisches Patentamt

European Patent Office

Office européen des brevets

(11) EP 1 512 625 B1

(12) EUROPEAN PATENT SPECIFICATION

(45) Date of publication and mention
of the grant of the patent:
**26.07.2006 Bulletin 2006/30**

(51) Int Cl.:
***B64C 37/00*** (2006.01)    ***B60F 5/00*** (2006.01)

(21) Application number: **02732764.2**

(22) Date of filing: **16.05.2002**

(86) International application number:
**PCT/ES2002/000232**

(87) International publication number:
**WO 2003/080435 (02.10.2003 Gazette 2003/40)**

(54) **AUTOCOPTER, LAND MOTOR VEHICLE WHICH CAN BE CONVERTED INTO AN AIRMOBILE**

IN EIN LUFTMOBIL UMWANDELBARES AUTOCOPTER-LANDMOTORFAHRZEUG

AUTOCOPTERE VEHICULE AUTOMOBILE TERRESTRE A MOTEUR RECONVERTIBLE EN APPAREIL AERIEN

(84) Designated Contracting States:
**AT BE CH CY DE DK ES FI FR GB GR IE IT LI LU MC NL PT SE TR**

(30) Priority: **22.03.2002 ES 200200683**

(43) Date of publication of application:
**09.03.2005 Bulletin 2005/10**

(73) Proprietor: **Gomez Lopez, Jose Luis**
**Madrid 28013 (ES)**

(72) Inventor: **Gomez Lopez, Jose Luis**
**Madrid 28013 (ES)**

(56) References cited:
**ES-A1- 2 151 798**    **ES-A6- 2 009 538**
**FR-A- 1 265 234**    **GB-A- 1 091 401**
**US-A- 3 112 088**    **US-A- 3 116 896**
**US-A- 3 261 572**    **US-A- 5 915 649**
**US-A- 6 062 508**

**Description**

The present invention according to is expressed in the patent request and in the statement of the present descriptive memory it talks about a snobista patentable talent, vehicle of terrestrial automotion to reconvertible motor in aircraft vehicle.

The systems for reconversion are referred fundamentally, in option of one or two motors to the following ones:

a) To a motor that in its slight conception of special, in symbiosis of thermal motor, it will present/display peculiarities and special configuration of the relation race-diameter of the piston, crank, connecting rods, valves, it forms of the blasting chamber, spark plugs and conduits of feeding.

b) To the transmission, presenting/displaying joint transmission on a same power shaft of gear of endless thyme for the rotor system when the talent in aircraft version and of transmission works it differentiates hypoid for when it works like automotive terrestrial of disconnection and auto logon, in the option of a single motor or two power shafts for the option of two motors.

c) To the mixed clutch, that he will be special, presenting/displaying three joint clutches of consecutive operation, automatic synchronous, one disc mechanic for speed change of the talent in version of car-terrestrial vehicle with automated automatic device with special gear of the change for immediate step of certain speeds; another one I centrifuge for the main rotor and third of friction to strap for action of the Stabilizing Rotor.

ANTECEDENTS OF THE INVENTION

Different archetypes and models from vehicles of terrestrial automation motor and different archetypes are known and models from helicopters sustained and driven by rotor equipment, but the news of any archetype of terrestrial automation to motor equipped with systems for its reconversion in aircraft is not had like which now it is designed. A vehicle of WWW type is known paten ES-A-2151798 alone a effete of state of technical and addition for request P200200683 and foundations request PCT and application European Patent

They exist multitude of automobiles that run by freeways, highways, ways, but they cannot fly; and they exist multitude of models of helicopters that fly, they take off and they land vertically but they cannot run by highways nor circulate around urban routes, closed nears space, nor to park in cities

For the understanding of the new invention, despite documents, that as far as possible, the Administration can consult, for the writing in its day of the report of the State of the Technique, they will be the lists of credits, the memories, the sketches and the calculations of some automobile of lightened sexticilindrico motor of cylindrical opposition, supercharged of thermal injection and those of some tripálico or cuatripálico helicopter, single-rotor of suspension and propulsion by main rotor and stabilizing, inclined with respect to the vertical that present/displays a horiznontal component for the propulsion and vertical component for sustention with a weight of 800 kg. in emptiness, taking into account which the new talent object of possible patentación is a species of semi-automobile and semi-helicopter, that although in principle, it can have by its aspect some functional or linear outer similarity with an automobile and a helicopter, it does not keep any constitutional relation nevertheless, nor functional with tee one of the vehicles of which it seems hybrid, nor with no vehicles of that they exist in the state of the previous technique, since it is another thing by its inventive activity.

The inventive activity of this talent stands out in the description of the invention that will put of relief that this one archetype by its specifications, mechanical, and functional as well as by its social utility, it surpasses and it surpasses any existing vehicle in the state of the previous technique.

The invention is defined according to the subject matter of claim 1.

It is tried to create a vehicle of terrestrial automation with systems for its aircraft reconversion in of four wheels single-rotor, tripálico or cuatripálico with the rotor inclined with respect to the vertical that will present/display horizontal component for the propulsion and vertical component for the sustention with a weight of emptiness of 800 kg. and with small stabilizing rotor in one of the tails of the talent..

This archetype will be constructed totally with ultralight materials, body-fuselage with skeletal structure of aluminium and fibber glass plates slightly amalgamated with light resin, hardened plastic crystals, without chassis with ground or large stone bench of plate for lodging of low part of the motor, change, subjection of tree of transmissions, differential, palieres and damping, being used in the power shafts and palieres steel to reduce its sections and thus to eliminate weight instead of doing them of iron. The wheels of the autocóptero will be of an alloy of magnesium and aluminium, with the mini sections of wide interior, height of eyelash, centre line diameter and I cross between disc, these minimums will be determined in the manufacture process, in order to obtain to the stability adapted to the weight and width of this vehicle.

The wheels of the front train will go equipped with an automatic device of embroider and pushes out of position of the plate in the asparagus, with device of shuttle to cross the steel axis of asparagus, in oquedad of the same one to the effect and obtaining to a perfect adjustment and an suitable subjection, having as well a system of curve-slide track by acanalamiento in the large stone bench of the vehicle to retrocession of both wheels until the back part of the vehicle, if it were desired that they served as it ballast, according to one went consuming combustible, in the version of aircraft, returning them automatically the same mechanism to take them to its site and to fit them with the automatic pins in its asparagus, when the vehicle becomes automotive terrestrial.

The cockpit of the talent is designed to give capacity to the pilot-conductor, but two passengers with the limitations of weight that will be pointed out in the present description of the memory, arranging in order that a seat in the front part left semitrim, since in the right semicentral part it will go located, assembled in hard plastic housing the rotor system with the articulables shovels and the vertical axis, autoensamblados and welcomed within the cockpit, when the talent worked in automotive version of terrestrial, in the back part two seats for passengers lodged.

This new talent will take lodged in its left side the automotive steering wheel for the terrestrial one, pedals of the mechanical clutch, brake, accelerator and hand brake and salpicadero, in this same side it will welcome the speedometer, it counts revolution kilometres, oil controls, fuel, temperature and controls of air conditioning and in its right side the control rod will be located, handle circular displacement, longitudinal and lateral, and the salpicadero of the same right side will welcome, control apparatuses, speedometer, altimeter, stabilizer and mechanisms of central drift, as well as controls of control of antenna and radio transmitter for possible transmissions of position location and shipment of S.O.S. in its case.

The talent will have and only lightened motor sexticilindrico of mixed-cylindrical opposition of thermal motor to transform the thermal energy produced by the combustion of the carburetted gaseous mixture into mechanical energy of movement of motor of injection with compressors, overfeeding pumps that will introduce pressure in the cylinders the mixture compressed previously with which will increase the power specifies of the motor and the elimination of injurious vibrations is obtained obtaining that the moment of inertia and flexion they are superb and it is possible to be held without vibrations an elevated regime of revolutions an rotations obtaining as well a high engine efficiency for when the talent has to work in version of aircraft, having to be its technical characteristics the following ones:

a) Shortening of the relation race diameter of the piston obtaining itself a motor flattened of inferior race to the caliber.

b) Rigidity of connecting rods of ample section, fixed to the crank and of enough diameter maintained by wide bearings.

c) Pistons lightened made with aluminum alloy.

d) Valves of great section.

e) System of injection in front of the admission valve.

f) will adapt the blasting chamber fit to the exigencies of this one motor of special design, occurring as well to the spark plugs a form and thermal degree adapted with the due direction and precision of the feeding conduits and it escapes. In this certain motor number of cylinders will be covered by a but that will take distribution valves, within each cylinder a piston of alternating movement will move that will be transformed into circular movement by a connecting rod articulated in the axis of cylinder and an elbow of the crank; the crank will assure the regulation the four phases of the cylinder; its rotation will alternatively govern the functions of lubricated ignition and air filtrate.

If the manufacturing technique presented/displayed insurmountable difficulties for the construction of this motor in lightened and thermal symbiosis, one will equip the talent with two motors, one lightened for action and operation of the rotor group and the other, the thermal one, for action and operation of the talent in automotive version of terrestrial, but in so assumption, with the modifications of the lightened one it will be reduced of sexticilindrico to cuatricilindrico, being located in the talent, one in the force body and another one in the later part, according to the necessities that are shown in the phase of manufacture with respect to not losing the balance of the center of gravity, in whose supposed to be located thermal in the front part the problem for the transmission to the rotor group of the ultralight motor, it will be solved with the dowry of an accessory power shaft, together with the driving shaft by one it joins homocinética of two universal joints connected to avoid alternatively accelerated of the accessory tree, and case of being located the thermal one in the later part, changing to the front traction by back with forecast of a direction of the wheels by simple arm and triangulados arms of reaction, and being the suspension bridge like special organ, it will be adopted connecting rod of reaction and arm of independent reaction of the suspension, having itself that to use in this case accessory and longitudinal power shaft, since the other dimanante tree of the ultralight motor, it will finish in the gear of endless thyme of the transmission of the rotor system, suppressing the section from this gear to the differential, as well as the anticipated encajador tube for the transmission of a single motor. In the case of double motor, also the special gear of reduction of the box of gears will be suppressed, taking into account which already each motor will transmit the revolutions adapted for the action of the rotor of the ultralight one and for traction and displacement of the autocóptero in terrestrial automotive version of the thermal motor.

When being the motor in the body, to the same one will have to apply it an equal and opposite reaction to the driving force transmitted by the rotor that will have to be compensated to the being Autocóptero a single-rotor one, by means of a small variable-pitch propeller of located horizontal axis in the later end of one of the tails of the talent, actionable with its corresponding gear and pertinent clutch, containable stabilizing rotor in the assembly of the fuselage, in order to avoid its deterioration and accidents when the talent works in automotive version of terrestrial.

The main rotor will be a completely articulated system of three or four shovels according to equip the talent with one or two motors, in that the shovels will be united at the top of the rotor by horizontal joint of shading allowing that each one moves independently of the other joints and that will be located at the top in their day by the manufacturer to a suitable distance of the rotor according to the stability and control that is anticipated for the talent. Also, the shovels will be united at the top of the rotor by a vertical joint of drag, compatible of which the shovels move towards ahead and backwards in the plane of the disc of the rotor.

The positioning of the joint will be determined in the phase of manufacture in relation to the opportune correction of vibrations. The system of rotor of this one talent will incorporate in addition cushioning, with the intention of absorbing the accelerations and desacelaraciones of the helicopter rotor blades.

For when the talent one becomes to work like venicle of terrestrial automotion and to avoid the problematic one that would suppose for the road circulation of the cities and highways, that the talent ran with the rotor and the discovered shovels, the shovels themselves as well will be articulated by folding sections with devices of small curve-slide cylindrical coals titmouse automatically on encajables tracks in subjection curtains ring, in order to obtain the necessary rigidity of the shovels when the vehicle had to work in version of aircraft. To such aims the vertical axis of rotation of the rotor also will be articulated by sections of 1 :50 m.s, until a length of 6 ms. upwards, assembleable in itself. The outer part will preserit/display the necessary canalizations so that by them it runs, in the assembly and desensamblaje, the folded shovels and all the rotor system that next to the plate and bushings of the rotor also will be assembleable within the cockpit of the talent. The ensamblables sections of the vertical axis of the rotor will present/display a embroider device as well and fits with pitons recogibles and tensile by internal wharves that yield to the percussion of the automatic extended one or gathering and.. that will allow that to the unfolding the axis is left with the perfect condition of rigidity and turn that must have the same one.

The rotation plane will not be horizontal, so that the attachment line of the aerodynamic force that develops the rotor is inclined with respect to the vertical, presenting/displaying therefore a horizontal component that the propulsion assures the autocóptero and a vertical component that allows to maintain themselves him.

The autocoptero in the option of a single motor, it will have a system of transmission of common tree, as much to allow that the transmission transfers the movement from the motor to the wheels for traction of the vehicle, working like automotive terrestrial like for the elevation and sustenation of the talent when it worked in aircraft version, taking to the mentioned power shaft a system for the action of the rotor, with gear of endless thyme, (joint of carved gear, filleted in screw form that will gear tangentially), arranging in addition all set to device mechanical to separate and to disconnect same and that does not gear tangentially with, the device offend less screw of the power shaft when the talent had to work inversion of terrestrial automotion, since when becoming disconnected this gear, the power shaft can continue only driving the differential that will be of hipoide type to eliminate weight. The power shaft will take as well to another autoencajable and push out of positionable device by means of a curve-slide encajador tube on the power shaft by means of mechanical device of collection and extension, with pitón fit able in a notch of the other end of the same tree that will fit itself and push out of position in the part superior of reduced section to the effect of the power shaft of which it will push out of position when the vehicle had to work in version of aircraft.

The system of transmission of the rotor will be designed to allow that the same one turns freely in its direction if the motor were stopped, producing a air flow upwards through the rotor system, in order that the shovels produce sustenation and traction by the angle of attack and the dynamic speed, lowering the passage of the group of the talent when descending by means of the air flow on the shovels earth can be taken as yes the motor worked.

As the transmission takes the engine power to the main rotor and to the stabilizer and the motor more discharge works at speed enough and with more RPM than the rotor, it is needed the opportune reduction speed and revolutions so that the rotor works properly, what it will be obtained through a gear of reduction in the box of gears and that the transmission is made in relation six to one and nine to one, that is, six to nine of the rotor, being due to consider that in the box of gears the reduction gear will be designed with the forecast of which it stops relation six to one to the 2,700 RPM of the motor, the rotor must turn to 450 RPM and in relation nine to one to 2,700RPM of the motor, the rotor must turn to 300 RPM.

The system of clutch of the autocóptero must be very special due to the weight of the rotor in relation to the engine power reason why it is necessary to have unclutched the rotor of the motor to avoid the excess of load for the starter engine, when the system of operation in version of aircraft is connected, the motor is assuming the snatch load the heavy rotor system.

As a result of the previously outstanding thing, the autocóptero will go equipped with a special system of mixed clutch of three clutches different from synchronous automatic consecutive operation.

One of the clutches will be disc mechanic for speed change of the talent, when it works in terrestrial automotive version, with device of the gear box for automatic step automated super express of direct super a low speed to of the motor immediately being able to drive with the power due the heavy load of the drag the rotor system and by the same system and the same also fast super form one becomes to low speed, in order that the gear of reduction of the transmission system obtains the reduction that requires the operation of the rotor in the proportion of revolutions with the motor that was put previously of relief.

Another one or the clutches will be centrifugal, with that the contact between the inner and outer parts of the same one is made by means of shoes with pressure by wharf. In the inner part of the same one they turn the shoes with the motor and the outer part of the same one. The drum of the clutch is united to the main rotor, through the transmission. At low speeds of the motor, the shoes will stay outside contact with the drum, by the action of the wharves. When the motor increases the speed, the centrifugal force will move the shoes towards outside until making contact with enemy with the drum, being transmitted the movement of the axis of communications. The rotor will turn smoothly in the beginning, increasing its speed as it increases to the friction between the shoes and the drum of the clutch until the friction reaches the power necessary to drag the drum and until the suitable RPM and to those of the motor are obtained proportionally.

At the moment at which the clutch totally is adapted, the rotor system will be producing the RPM equivalent to those of the motor.

The third clutch that will be of friction or strap, pilot could be driven directly by the conductor -, by means of a handle of the cabin. The power of the axis of the motor (also with the pertinent device of gear of reduction of speed of the box of gears to adopt the RPM of the motor to the RPM of the stabilizing rotor), it will be transmitted by a series of discs of friction or strap to the stabilizing rotor.

The gear box of the autocóptero on the traditional normal gears of the change of an automobile of five speeds and reverse gear; it will present/display in addition the following peculiarities and special devices:

a) Automatic device, automated, with additional special gear, for it passes super express, of speed à, super á to direct (thus being able immediately to drive and to start up the heavy rotor system when it is desired that the talent works as aircraft and needs to make takeoff of maximum characteristics to cross very near obstacles and footpath of ascent of small spaces, having to make the takeoff in stationary and with high angle), device that with the same characteristics allows as well, once taken the rotor system that obtains with normality the take off and the stationary ascent in happening quickly of super-direct to 2° -3°, and that working the motor to less revolutions obtains the easy adaptation of the relation of revolutions motor to the rotor system.

b) special Gear of reduction so that the engine power that is translated in which the greater engine speed produces revolutions that are much greater than those than precise the rotor system, reduce the revolutions in the proportion that was put of relief in the description of the transmission system.

The new talent will take to a system of laser of gas and semiconductors that will produce waves maintained modular with devices of location and launching of words in bursts; one in the cockpit of the vehicle with four directions in crystals of the sides and straight left, as well as crystals front and back, in order to send to the message "Autocoptero Attention on the verge of taking off and rising, let free space in a radius circulate of 30 ms.", and other had in the part low or ground the vehicle to send as well downwards, also the message "Autocóptero on the verge of landing lets free space in a radius circulate of 30 ms.".

The instructions of handling factory use and entertainment, they will contain the indication of prohibition, for the pilot-conductor, to make the maneuver of reconversion to aircraft, if a space in circular radio of 30 ms does not exist or they circulate matched by right or left other vehicles of greater height than the one than can surpass the bar rotor shaft in its Maxima prolongation and no case if they circulate in the radius of the 30 ms. trucks, buses or vehicles of equivalent or greater heights, or another autocóptero on the verge of taking off or landing, as well as that will not be able either to be made the reconversion maneuver in places or spaces in which obstacles existed, lateral frontals or buttocks that surpass the peak altitude of the rotor shaft in their Maxima extension or its time existed cables, electrical layings, lights or trees that can intercept the helicopter rotor blades in their operational range.

$$\text{CENTER OF GRAVITY} = \frac{\text{TOTAL MOMENT}}{\text{GROSS WEIGHT}}$$

The most important forecast in this invention will be, the determination of the center of gravity, in the structure of the talent, for it it must establish the gross maximum weight so that fulfilling it formulates of the center of gravity the talent is within the requirements of the weight centered for flight in aircraft version.

The center of gravity using I calculate (Weight - arm - moment), it will be determined by the empty weight, values of the weights including the equipment and distances (arms), from the reference line of each one of the parts of the payload(pilot, passengers, fuel and luggage) considering previously, also it formulates:

$$\text{Weight x Arm = Moment; and Moment + Arm == total Moment.}$$

Applying it formulates it in the new talent, the reference line, considering that you limit them approved to obtain the center of gravity is 6.90 cm. in front of the station Or, and 9.20 cm. behind station 0; it will be the midpoint of the structure of the autocoptero in order that the moments produced by the weights located in front of the reference line that are negative, they are compensated with the located ones behind the meritada line, that they are positive.

The manufacturers will give to the talent a comprehensive empty weight(body-fuselage, motor, device and gear of main rotor and stabilizing, gear box, transmissions, clutches, devices of action and handling, seats and wheels), so that together with the useful weight (pilot-conductor, passenger, fuel and luggage), a maximum gross weight is obtained that fulfilling it formulates to obtain it to the center of gravity the talent is within the requirements of weight and trim for flight in version of aircraft, according to the calculations of the picture that slogan next:

CALCULATIONS:

| Limit of reference | Weight | Arm | Moments | |
| --- | --- | --- | --- | --- |
| | | | Positive | Negative |
| Empty weight: | 820 Kgrs. | +13,80 cm. | 4960,36 | |
| Fuel: 81 liters<br>Luggage: 14 Kgrs | 81 Kgrs.<br>14 Kgrs, | + 4,60 cm. | 220,36 | |
| Weight in seats:<br>Forward: 77 Kgrs.<br>Buttock: 88 Kgrs. | 165 Kgrs. | - 65,30 cm. | | 4650 |
| TOTAL | 1080 Kgrs, | | 5180,72 | 4650 |
| TM = 5180.72 - 4650 = 530,72<br>Cg = 530 /1080 = 0.490 + 0.112 cm. behind the reference line. | | | | |

The technical problems that considered so that a vehicle of terrestrial automotion could become aircraft, by the difficulties of which a single motor could drive the vehicle in its two versions, terrestrial and aerial, power differences, speed and revolutions of the motor and the rotor system, difference of systems of transmissions for automotive terrestrial and the aircraft one, as well as deficiency and inefficiency of clutch of the motor with the special clutch of the rotor, they have been solved:

a) With the adoption of a ultralight motor with the own peculiarities of a motor flattened of inferior race to the caliber, of rigidity of connecting rods, of lightened pistons, of valves of great section and fundamental mind of the system of injection in front of the valve of admission hibridado of thermal motor.

b) With the system of transmission of common tree for rotor and the differential.

c) With the special system of mixed clutch of three different clutches, of automatic and synchronous consecutive operation.

d) With the special devices of the gear box of additional special gear for fast phase automatic automated of happens of super low speeds to direct taking advantage of and adapting the force transmitted of the motor to drive the rotor system; with the special gear of reduction in the box of gears to reduce and to adapt the super revolutions of the motor to the necessary revolutions for the operation of the rotor system.

The new invention has advantages in relation to the state of the previous technique, referred the archetypes with which it can present/display some similarity, the automobile and the helicopter; the advantages of the helicopter for transport of executives, businessmen, transfer of hurt patients or that has remained, non insufficient, but if inadequate in some cases, taking into account that the helicopters have with respect to the automobiles some deficiencies and disadvantages, like impossibility of access to spaces closed like marquees surrounding spaces of houses and in general circulation in cities and enormous difficulties of landing and parking; also the automobile has enormous disadvantages in caravans, retentions or in accidents, by its lack of lateral mobility, slow or impossible displacement in case of sudden disease or cardiovascular accident of some companion of the vehicle or delays by retentions of traffic for medical professionals, executives and businessmen. The autocóptero, that although it can have some similarity of external appearance with the mentioned archetypes, automobile and helicopter, it does not have with such, no constitutional nor functional relation, being another vehicle with great advantages and insurmountable utility by the specifications es of the systems of which it arranges to avoid all the disadvantages that have been put of relief in other vehicles, taking into account that the Autocoptero in its automotive version of terrestrial, thanks to its system of automotion of ultralight and mixed motor or motors, thermal, its double system of transmission, its ensamblables rotors and their mixed clutches, it can circulate around wagon freeways ways and cities, as well as to park and to introduce themselves in closed spaces of the cities, and at the same time it is possible to be elevated in stationary, to take off and to fly in cases of agglomerations, retentions or accidents.

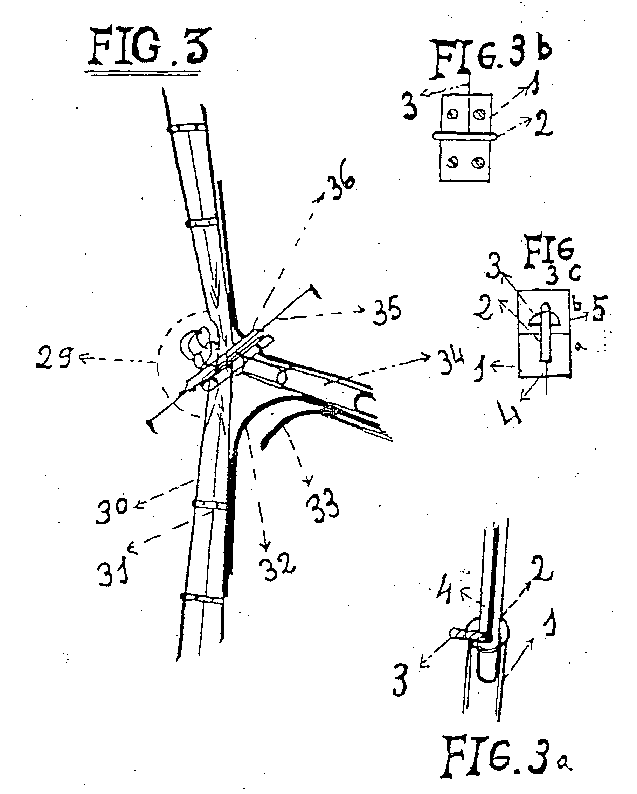

The fold of the shovels whose technical characteristics consist in the figure 3b) and 3c) of the main patent to obtain the articulated one and folding of the shovels and that once folded run by the canalizations located next to the vertical axis of the Main rotor for their assembly in the interior of the vehicle, one essentially obtains with the mechanism and following originating dispositions:

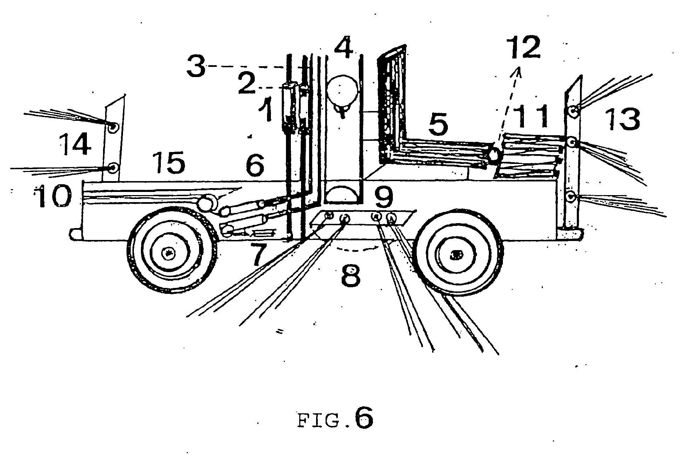

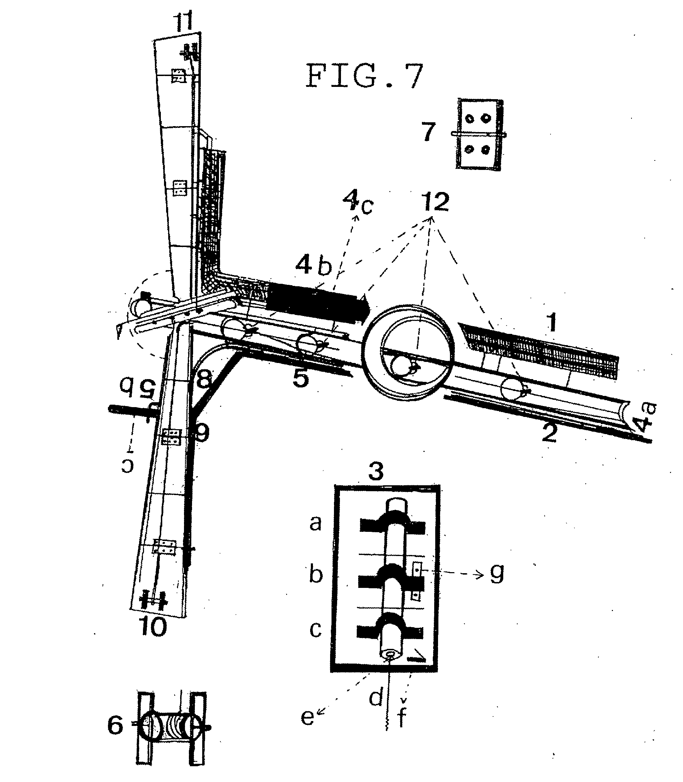

In the part of the obverse of the sections of the articulated shovels, they adhere under tube, of the determineable corresponding section in the manufacture process recogedor cable (fig 6-6,7,9) as well as under tube of the same section extendedor cable(fig 6 7,5); the mantenedor cable of rigidity of shovels (fig 7 8,9), extended under tube as well of the pertinent section and in the first tensile part, at the beginning of the shovel a roller will be located coiler (fig 7 10), mounted runible in rotation on two sections of billet, adhered in amalgam to the construction equipment of the screwed shovels and in reinforcement with double spiral in inverse spiral, provided as well with the pertinent magnet, in order that when it arrives the encajador cable coils it for correct fold of the articulated sections of shovels (fig 7 11).

In the part of reverso of the articulated shovels, in his first section will be located another roller of runible magnetized steel cable extension on two perforations, one to each side, so that it turns with comfort, to once the extendedor cable arrives him that went off from the bottom of the warehouse of the cockpit and once the magnet has its desire deffect automatically to welcome and to coil the cable on the roller, until it obtains to the effect coiler consequently and the extension of shovel (fig 7 10).

In reverso of the shovels and its articulated sections, it will be arranged under oquedad of type pin of coal titmouse, the devices through which it will penetrate the sujetador cable and giver of force for the manutención in rigidity and solidarity of the sections of the shovels, in agreement it is indicated in a), b) and c) number 3 of figure 7, without the booster cable is divided in sections, if not which it maintains a unit of rigidity in all its extension, with the only exception of a angulatura in the end underneath the shovel of greater section than the rest of the tube, in order that running in such situation on the inside of the pertinent tube since it was shot of the warehouse, by the pertinent mechanism of firing located in her; trying as well which the cable is made of material with certain flexibility, for example massive brass, in order that fig runs better (7 5,8,9).

The cable rigidity giver will go united to a trail rope who will separate of him, once it arrives at the pins of type coal titmouse (fig 7 e, d) and once he had penetrated the cable in the pins and come off enlistment the trail rope, the safety pin will avoid that the cable rigidity giver could leave or be given off (fig 7 3,f).

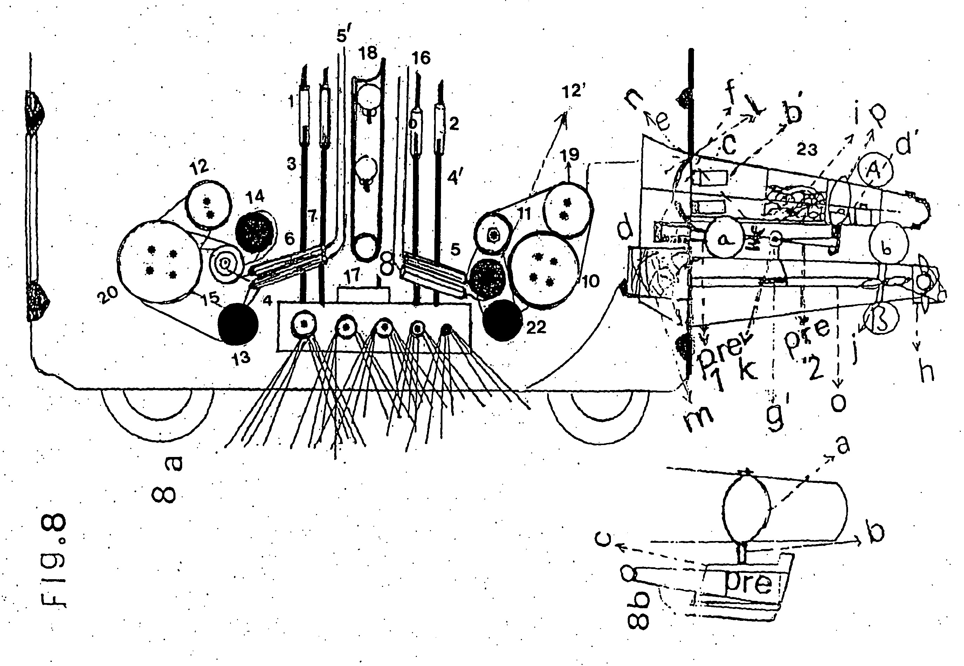

The small tubes electronic triggers of cables extendedor, recogedor and giver of rigidity of the sections of the shovels located in the warehouse of vehicle (fig 8 1,2,5,7), they will make the firing of his respective cables by means of the dowry and drive of electronic systems and electrical and the cable scan ascend perfectly within the tubes, next to the small tubes cable triggers they will be located properly coiled cables of extension and folding of the shovels, had to individual sides the mechanisms triggers (fig 8 11,21,13,15), of such form which they connect and they autoinserten previous the opportune drive from the cabin by the conductive pilot, in the principle of the channel of exit of cables; also they will go off of the same form, but as its rigidity unit the cables givers of rigidity to the shovels, that they were arranged in the form that appears in (the fig 8 1,2).

As much the extendedores cables as the rigidity cable are cut, as well as the channels of discurrimiento of the folded shoveis, to a height that does not arrive where it is located the device of beating of the rotor, compatible of which in the its constant and fastest turn, when making the function of beating of the shovels, it did not encounter over these devices, those that in their end will have of pertinent magnets operation and consecutive activation, that they will make based on attraction the welcome of the sections of such that were in the end of the part of reverso of the last section of articulated shovels (fig 7 5, 4b).

The parts of cables, as much retailers as recogedores and of rigidity maintenance, that they will be cut as well so that they did not prevent the turn of the beating of the rotor, also they will go equipped with pertinent magnets of the same characteristics, actions by means of radio control from the control room of the talent, compatible of which they are located exactly in the moment for being driven, with its homologous ones of the part adhered to the main axis, (fig 7 2,1).

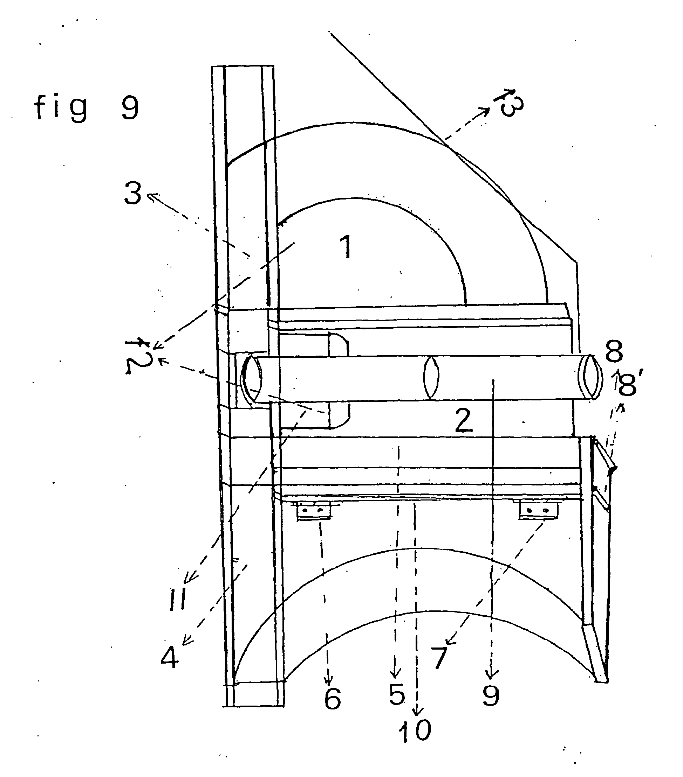

The assembly in the vehicle of all the rotor group, clutches, change and group of shovels will be made in order that it adopts the necessary height and width in diminution running all the group by means of two wide tracks, one in the part of ahead and another one in the back part, on that it will run in bridge of subjection of stabilizing rotor (fig 9 3, (1, 2, 9, 12, 13). The sujetador bridge of the cable of the stabilizing rotor, it will automatically take two encajables and desencajables hinges for its displacement towards track (fig 9 6, 7).

The collection and location of the stabilizing helicopter rotor bladesFRE1 and FRE2, (fig 8 2,3), one will take place from the position (j) of the same figure, until position (d, f), once the accionadora piece of shovels (fig 23- g), it is had automatically out of position by means of the opportune order of radio control and running by the circundadora track of the shovel (B), that it goes adhered to mima on the other hand low lateral right (fig 8 23 h).

The stabilizing rotor blades, once made its sliding by the track, by means of its sliding device, soldier to piece (fig 8 23g') until its station, On guard of withdrawal they will be subject at heart, by an incision made in the sujetadora piece of tails (fig 8 2é), and by its outer end, subject by a resistant descendent revolving tube from the tail (a) to which it goes subject by means of union to pertinent clip (fig 8 23kp).

The small tubes electronic triggers of extensores cables recogedor, and rigidity giver the sections of shovels located in the warehouse of vehicle (fig 8 1,2,5,6) will make the firing of their respective cables by means of the dowry and drive of electronic and electrical systems; next to the small tubes throwing cable triggers they will be located properly coiled cables of extension and folding of the shovels ready to individual sides of canoncitos (fig 8 9,11,13,15), of such form that connects and they autoinserten previous the opportune drive from the cabin of the pilot-conductor; at the beginning of the channel of exit of cables, also they will be had the same form but as their rigidity unit the cables givers of force and rigidity of shovels will be arranged in the form that appears in numbers 3 and 4 of figure 8.

As much the conductive extendedores cable tubes, recogedores and givers of rigidity to the sections of the articulated shovels, they are cut like those that ascend from the warehouse of the vehicle at level, superficially and below the ventral oscillating beating of the Main rotor in order to avoid all blocking to the turn to circulate of this beating (fig 7 5,2) going equipped in their extreme final-part with opportune magnets of operation and consecutive attraction that make the corresponding attraction based on attraction with welcome for link of the sections, that also they will be suspended in the last ends of the articulated parts of the shovels in its obverse and reverso, taking into account that the parts of those of the conductive tubes of extendedores cables, recogedores and mantenedores of rigidity of the sections of the tensile shovels, they will be suspended as well in the internal final sections of the articulated shovels, they will go equipped same the aims with encajamiento and links as much of all the sections and as others infallibly locate a front to others and the function of discurrimiento by the channelers of opportune cables can be made perfect, exactly and chronological (fig 7 5.2,4b,I).

In the warehouse also it will go located the laser system for emission of optical messages in demand of which the other vehicles leave space of 35 meters for landing of the autocóptero, messages in sent intermittent green ray luminosity orange and through the opportune exits to the effect from the ventral part of vehicle(fig 6 8) and (fig 8 17).

In connection with the reviewed system of laser, ventral emission for landing and with transmission of the central transmitter, located in the warehouse, it will exist as much in the windshield, front crystal, like in the back crystal other elevables and descendibles devices fore mission of the same optical signals in the same tonalities of ray color, in order to demand to the vehicles that circulate as much ahead as behind, that they leave distance of 35 meters for the takeoff of autocoptero(fig 6 13,14).

Other dowries of the invention to satisfy social necessities, of improvement of transport and welfare or physical gain of time indisplacement, they will consist of the following ones:

In the tails of the talent, and concretely in the tail (a) and property adhered and without it produces ready overweight and between same and the tail (B), on the other hand superior it will be located cylindrical cockpits of the capacity sufficient to lodge, a) (fig 8 2a) a service wc, of such form that in its superior part has a hinge to drive of the ceiling at the moment that is needed to provide ventilation, and with devices of a small track, with a folding cover that can allow the one that when it circulates in automotive talent like terrestrial, be left the at sight quarter of wc of the public totally hidden.

Between the same tails, in its final part, another cockpit will be had analogous form to the a) b) (fig 7 23b), destined to small operating room or small room of you cure, when one treats in its case of autocóptero destined to some public service of rescue or small warehouse of equipment or material of medicine kit or in its case small quarter of leisure for playful activities, if one were private autocóptero.

As well in the tail (a) (fig 8 23c) and in his first section, it will be had a cockpit equipped with door descendible and provided with the pertinent form to produce light and transparency. Destined to welcome the stretchers for transfer of hurt and or patients, if one were autocóptero destined to public service or rescue, or of an alcove of the dimensions that comes, if one were the version of autocóptero of particular property.

In the warehouse, of the talent the laser system for optical signals in connection with the request acoustics will be restored as well of which it leaves by other vehicles 35 meters for landing of the autocóptero, message that will project its words in green orange and, in rays projected aliquotly by the central ventral part in the formand disposition that appears in (the fig 8-17) and (fig 6 8). In connection with the reviewed system of emission of the central laser, in the windshield of the front crystal of the vehicle, and in the buttock they will go located two systems of laser beams emission of the same characteristics for takeoff (fig 6-13,14).

When the talent becomes, in order that the vehicle works like automotive terrestrial or automobile and to avoid the problematic one that would suppose to circulate between the streets of the cities and to accede to the urban parkings with the shovels totally extended and rigid, the shovels of the autocóptero already settled down in the main patent that would be articulated by folding sections; in order to obtain this articulating and folding without problematic some, and in order that its assembly in the interior of the talent, one settles down that it must obtain essentially with the devices reviewed in figure 7, and that is the following ones:

In the part of reverso of the sections of the articulated shovels, they adhere under tube of the determineable corresponding section in the process of manufacture of recogedor cable (fig 7-5b), as well as under tube of the same section extendedor cable (fig 7 5,8,9) and the mantenedor cable of rigidity of shovels (fig 7 9) extended under tube time of the pertinent section and in the first tensile part at the beginning of the shovel a roller will be located coiler (fig 7 10) mounted, runible in rotation on two sections of prebath tub adhered in amalgamto the construction equipment of the shovels and screwed in reinforcement with double spiral, in inverse spiral, provided as well with the pertinent magnet in order that when it arrives to him the extendedor cable coils it for the correct extended one of the articulated sections of each shovel (fig. 7-10).

In the obverse of the first section of the articulated shovel it will be located as well, another roller coiler (fig 7 11) of the same characteristics that the extendedor previously mentioned for the collection of the shovels by means of the winding of the recogedor cable conforms figure in (the fig 7-11).

Also in reverso of the shovels through all the articulated sections it will be equipped to each section under oquedad of type pin of coal titmouse the devices through which giver of force for the mantención in rigidity and solidity of the sections of the shovels will penetrate the sujetador cable, in agreement it is indicated in sections a), b) and c) of number 3 of the fig. 7, without this booster cable is divided in sections, but that maintains a unit of rigidity in all the extension that includes the different sections from articulated shovels properly presenting/displaying in its final part soldier a capturing and soltador prensor (fig.7- 3d) trail rope, cable that will be come off the cable automatically (giver of rigidity to the shovels), once this it penetrates in all the oquedades of the corresponding pins type cerojillo (fig 7 e) d)); also it will go equipped to the last section with the tensile shovels of a sujetador pin cross-sectional inmovilizador of the cable rigidity giver to assure that once distant the cable conductive and penetrated the cable giver of rigidity to the sections of the shovels this cable will not slip nor will leave (fig 7 3 f)), this sujetador cross-sectional pin of the cable giver of rigidity to the sections of the shovels, it will be run and it entered operation immediately after the cable has penetrated in all the oquedades of coal titmouse and the trail rope is had automatically separated (fig 7-3 e) d) and f)).

BRIEF DESCRIPTION OF THE DRAWINGS

FIGURE 1. Vista in perspective of the Autocóptero, with all the essential mechanisms.

FIGURE 2. Vista in section of the mechanisms of rotor transmission (21), differential transmission (20), systems of mixed clutches, mechanic (11) (26), centrifugal (28b) (19) and of friction (or strap) (24) (28), gears of main rotor (1), stabilizing rotor (6) and system of rotor (21).

FIGURE 3. Vista in section of the plate rotor head (29), spark plugs of flapping hinge (36), articulated shovels (31), devices of articulated and assembly of them in the vertical axis of the rotor (31), channels of assembly of articulated shovels and the own vertical axis of the rotor (34).

FIGURE 3-a) Detail of the tube assembler of the axis (1), section assembly of the axis containing in its inner mechanism to loosen and to gather pitón sujetador of the embroider (2), Sujetador Pitón of the embroider with inner wharf (3).

FIGURE 3-b) Hinge for fold of shovels with subjection to shovel by thyme (1), joint of the hinge (2), collection device (3).

FIGURE 3-c) Reverso of the hinge (1), coal titmouse-to hold with firmness the extended sections of the shovels (2), it fastens with rings to fit coal titmouse (3), device for action of the coal titmouse.

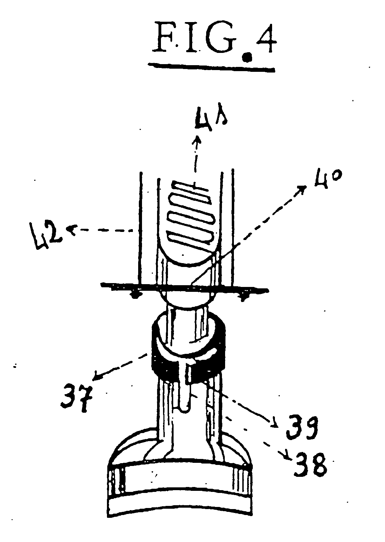

FIGURE 4. Automatic device of connection and disconnection of the shaft power to the differential (37), device of automatic collection by wharf of the curve-slide encajador tube on power shaft (40, 41, 42), notch in the center of the reduced section to welcome pit6n of the fit able part of the tree (38), pitón excellent partly superior of the fit able section of the power shaft (39).

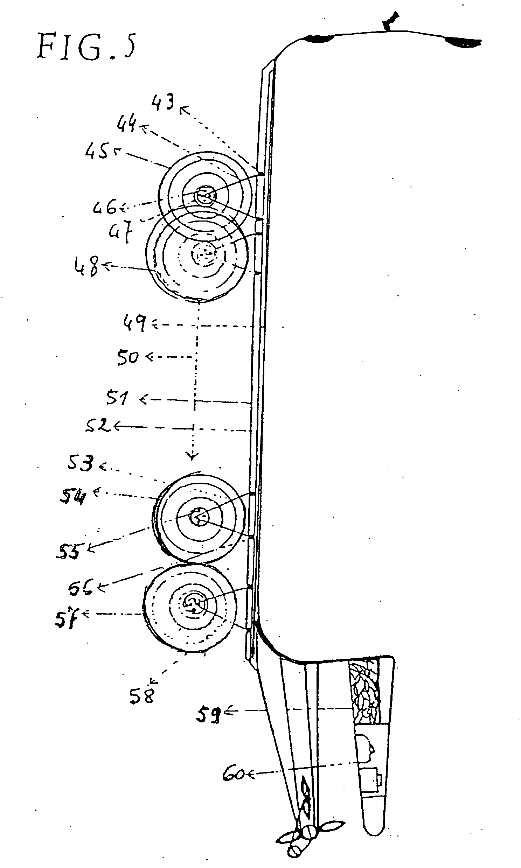

FIGURE 5. Mechanism of discurrimiento of game of wheels of the vehicle interrestrial version to serve as ballast, if it were necessary, in case of consuncción of fuel (43, 44, 45) and (55, 56, 57).

FIGURE 6. Vista in perspective of the warehouse of the autocóptero with its devices of electronic tubes extendedores cable triggers or throwers, recogedores and giver of force and rigidity to the sections of folded shovels (fig 6 6,8) extendedor cable, volute next to small cañoncito (fig 6 7), cables givers of rigidity to the sections of shovels articulated arranged in felt parallel in front of the mouth of throwing cañoncito device (fig 6 8) section of slippery track of shovels folded with device in head of one of the sections of folded shovel, speedboat through track (fig 6 5, 11, 12), conductive extendedores cable tubes, recogedores and givers of rigidity to the shovels articulated by sections (fig 8 3,4,5',8). Device of ventral laser for front and back landing and crystals emitting optical messages for takeoff (fig. 6 8.13 and 14), section of the central rotor shaft with elevation and reduction of form by telescope (fig. 8 18).

FIGURE 7. Obverse and reverso of shovels by articulated sections, properly embisagrados with conductive cable tubes extendedor, recogedor and giver of rigidity to the articulated sections of the shovels (fig, 8 9) rollers coilers (fig 8 10,11), detail of the main rotor shaft, had in ascending and descendent sections with system by telescope and section slippery track of section of folding shovels (fig 7 â, 4b). Detail of the pins type coal titmouse with the cable giver of rigidity to the sections of the articulated shovels and with details of the trail rope together with the giver of rigidity by means of embroider devices and as well pushes out of position automatic previous electronic order and of radio - control and the clausor cable pin rigidity giver in avoidance guarantee of which such cable loosen or slips (fig. 7 3 f) d) e)); detail of the roller extendedor and recogedor cable coiler with movement circular on its subjections and equipped with corresponding magnet (fig 7 6), detail of hinge for sections of articulated shovels of Main rotor, screwed to spiral double, it threads inverse, of Main rotor (fig. 7.7).

FIGURE 8. Vista in section of the firing gears or extension electronic cable launching, recogedores and givers of rigidity to the articulated shovels of Rotor (fig 8 1,2,5,6,9,10,12,19,20), small tubes triggers or throwers of cables by means of electronic system and radio control (fig 8 1,2,5,6); controls of electronic transmission of you order of radio control for launching or cable firing (fig 8 10,20); devices of transmission of you order of launching received of cabin of the vehicle and transmitted by the controls of transmission (fig 8 12,19); winding of trail rope of cables givers of rigidity to the shovels articulated in sections (fig 8 9,11,13,15); central system of emitting laser of optical messages so that other vehicles let 35 meters of space to land the autocóptero (fig. 8-17); Tail To, new compartment with sliding door and windows to be used for location of stretchers when rescue autocópteros on watch public of and rendering first aid or dormitory in particular autocópteros are (fig 8 23 cs) small supported cockpits on and in both sides one for location of bath and WC, and another one for small operating room or room of you cure if one were autocóptero of rescue and rendering first aid, or of living room if fig. were particular autocóptero (8 2á) and 23b)).

FIGURE 9. Mechanism for discurrimiento of the bodies of clutches, bridge of attachment of the stabilizing rotor and axis of assembleable main rotor (8, 13), (1, 2, 10), (3, 4, II, 12).

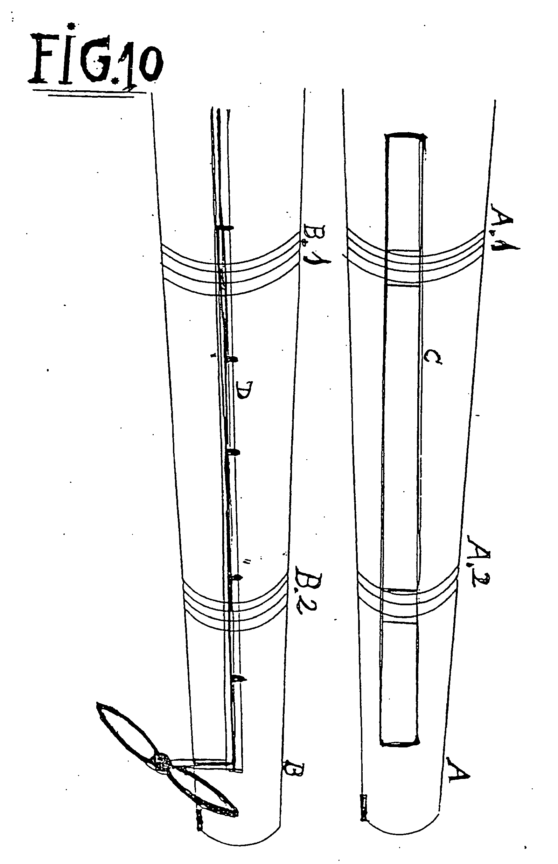

FIGURE 10. Mechanism of semi withdrawal of the back tails of the talent by means of tensile and shrinkable devices of zingel (To 1, A. 2), (B.1, B.2).

DESCRIPTION OF A FORM OF PREFERRED ACCOMPLISHMENT

At sight of the different described drawings previously it can be observed that the form of preferred accomplishment of the invention is the following one:

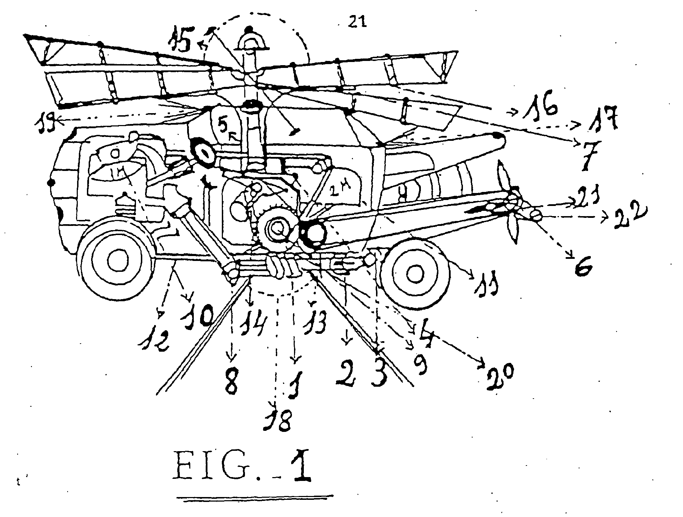

FIGURE 1. The system of transmission of endless thyme for the rotor system (1), it will be a set of gear, screwed threads in the power shaft in which it gears the gear tangencialemente that it drives by means of such gear the mechanical device of the rotor (9) the system of connection and disconnection of the power shaft for differential, it will be made by means of slid encajador tube on power shaft with notch which pitón enters, situated in the superior part of the reduced section of the power shaft in which it fits (2), The system of gear and transmission by pulleys for the stabilizing rotor will be made by a gear, geared with other than it drives the rotor clutch, and fit able as well with endless screw (3), with pulley channel that drives the wheel of pulley of the stabilizing rotor (22). The device of retired and decontamination of the clutch and rotor system will be obtained by means of two I sweep fixed (4), one of which it goes fitted in the nucleus thyme of the gear of the ample system with and rigid balance beam, that to the being driven by means of handle in the cabin it produces the disconnection of the rotor system and the centrifugal clutch and friction of pulleys. The gear of the centrifugal clutch and rotor system will be obtained by means of gear gears with the endless screw with channel for pulley (9), driving by means of such pulley the centrifugal group of clutches and friction it obtains the operation of such and of the rotor group and the homocinética meeting of universal joints it will avoid the 2 the accelerated and delayed alternative movement of tree (8).

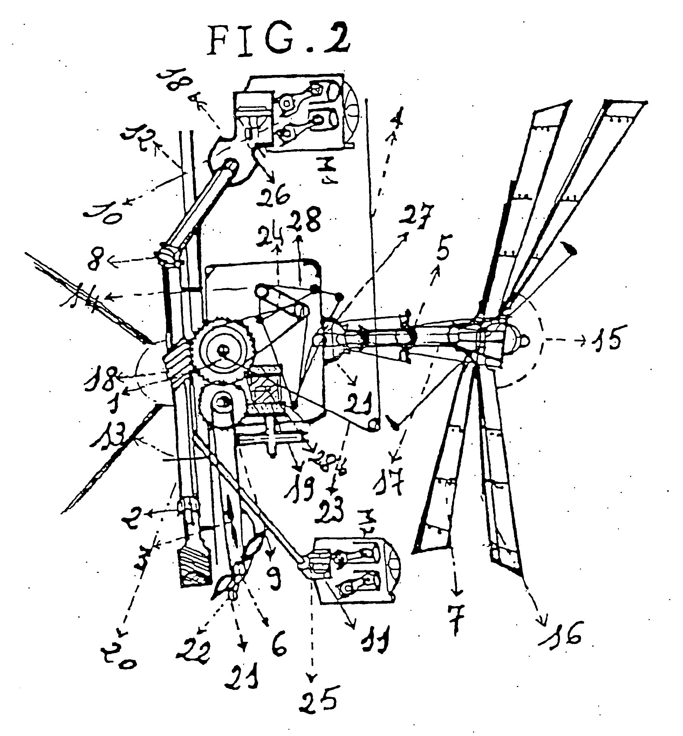

FIGURE 2. The gear of gear of clutches and rotor system (1), that the endless thyme of the power shaft (18) and the gear with canalization connexion an tangentially with pulleys for stabilizing rotor, centrifugal for the rotor group and rotor stabilizer will allow the action by the transmitted energy of the motor through friction and power shaft common in the option of a single motor of the operation to the necessary revolutions by the clutches (1), and in the option of two motors, the existence of two power shafts will allow that the second tree drives the train of front wheels (12), with the gear in connection with the one of the clutch and rotor one will be able to drive by means of pulley the stabilizing rotor (9). Centrifugal clutch (19) (28), of joint operation with the friction clutch (24) (28), it will allow the regularización of the revolutions of the motor for operation of the main rotor (5). The vertical axis of the rotor will be equipped with devices of assembly in itself, tensile by sections of 1.5 ms. up to 6 m.s, with outer canalizations to lodge the disarticulated shovels the rotor (17). The device of connection and disconnection of the clutches centrifugal and of friction, as well as of the rotor group, it will be obtained by means of two sections of bars, one with subjection in the head of the central thyme of the gear(23), the other bar that will run in its union with second, on a small revolving pillar of support, it will continue until the driven cabin mechanically to disconnect the rotor group when it was desired that the single talent worked like automotive terrestrial in the option of a single motor (4). In the option of two motors the system of transmission for rotor(18),(1), that it goes lodged in tree common with the differential transmission to obtain once connected, drive the rotor and you allow to work the centrifugal clutch, it will be constituted by the set of the gear of excellent filleted endless screw of the tree and by the gear of centrifugal the rotor system and of clutches and friction with which it gears tangentially to transmit the driving force that generates the opportune motor and that the system engages centrifugal (19) (28b) and the reduction gear transformed into the pertinent revolutions for the rotor. The system of disconnection and connection of the transmission for differential is obtained by means of curve-slide encajador tube by the power shaft that it links to each other uniting the two separable parts of the power shaft, being perfectly fitted when entering the notch practiced in the superior part of pitón that goes united to the end of the other fit able part of the power shaft (2). Device of fold of shovels articulated consisting of you sighted automatically folding with tensile and recogible coal titmouse mechanically to provide the sufficient rigidity to the extended shovels (7), those that with the rotor head, bushing and folds that have the opportune devices of collection as well (15), they are assembled in the interior of the talent when there was to work like automotive terrestrial.

FIGURE 3. System of fold of helicopter rotor blades and autoensamblaje of the vertical axis. By means of this mechanism whose technical characteristics for their better accomplishment consist in fig. 3-b, and 3-c, one obtains the articulated one and folding of the shovels by sections(31), those that once folded will run by the canalizations of the vertical axis for assembled his in the interior of the cockpit of the autocoptero (32). For the action and independent beating of the shovels and that these can make the same one upwards and downwards, it will be equipped at the top with the rotor of an oscillating system of bushings (29). The device of autoensamblaje of the vertical axis of the rotor will be obtained by means of the adaptation of a mechanism that automatically obtains the assembled one in themselves of the different sections from the vertical axis of the rotor by means of the devices that consist in the fig. 3 a) and fig. 3 b); For the fold of the sections of the shovels it will be adopted, by the part superior of the sections a subject hinge by means of thymes to the shovel (1), so that by means of the action of the superior leaf of the hinges by cables of the action (3), the hinges of the same ones flexionen (2) and the sections of the shovels are folded so on.

Figure 3 cs) to complete the fold of the sections of the shovels in the inferior part of the sections to each side of each folding section will be arranged adhered to same a plate embedded in them, screwed and sufficiently resistant (1)(5), the a) will lodge the cylindrical coal titmouse (2), actionable by means of the cable of mechanism of collection and extension (4) and the b) it will lodge the curtain ring in which, with the sufficient hollow of route for the coal titmouse it will befitted éste (3).

FIGURE 4. System of connection and disconnection of the shaft power to the differential; the accomplishment of this one system is obtained: a) by means of a encajador tube of greater section than the parts of the tree that is going to unite (37), with it reduces in the superior part to allow to the embroider of piton of the section of the fit able tree (38) the section of the fit able tree will tolerate in its superior part pitón that will fit to give to security and consistency to the union of the tree (39). The section of the fit able tree after the piece that fits of smaller section increases of size and contains in itself the distant device of and extension (42) (40). The device of retired and extension consist of prebath tub of action of retired and extension that a single body with the fit able section of the power shaft forms and contains to both sides, right and left, the extendedores recogedores cables (40). The recogedores cables extendedores subjects to the prebath tub will be driven mechanically from the cabin of the talent (42). The section of the fit able tree takes in its interior a extendedor wharf, in order to recover this section after to be gathered to fit it again.

FIGURE 5. Device of train of sliding front wheels (45), front wheels (43) ball of internal track with pitón in the ball with wharf to leave automatically and to be able to leave the arm of the mechanism fixed of moves (46), device of automatic embroider of the disc of the wheel in the asparagus with pitones that are introduced automatically in the orifice "ad hoc", of the asparagus (47), arm of desplazador mechanism (48). Image of displaced wheel (49) (50) (51). Channels for desplazamento of the arms of the front train of wheels(50). Sense of the route of the displacement of the train (54) (53) (55). Back train of wheels with such devices (57) (58). Position of front displaced wheel for ballast (58). Fuel tank (60). Departments of luggage.

FIGURE 6. The system for the form of preferred accomplishment and perfect operation of the articulated one and disarticulating of the sections of the main helicopter rotor blades, they will be two cables under tube, one extendedor of the shovel sections and another recogedor of all the sections also under tube, (fig. 6 2,3) (fig, 7 5,5b,8,9); disparables or launchable cables from its storage in the warehouse of the vehicle by electronic mechanisms, of small canoncitos triggers by means of the opportune message of order by radio control (fig. 6 6,7); cable giver of rigidity to the articulated sections of the shovelsunder tube (fig 6 7,8); section of the main rotor shaft with device of autoensamblaje with system by telescope (fig 8 â), section of the track destined of the sections of shovels articulated of the Main rotor, in order to locate them in the station in the vehicle that corresponds(fig to them 6.5); folded shovels and detail of discurridor device by tracks (fig 6 11,12); a system of control of laser for optical emission of launching of messages to other request vehicles of space to land or to take off(fig. 6 13,14).

FIGURE 7. The conductive tubes as much of extendedores cables as recogedores, as well as of the giver of rigidity to the sections of the articulated shovels of the Main rotor they were cut as well as the section of slippery track of shovels already folded to the height of the device of ventral shading (fig 7 5,4b); in order to avoid blockings to rotatory-revolving function of this device; these sections to run by the suitable site at the moment of unemployment of the shading extending itself to be united as well tote sections cut below the head of shading (fig 7 1,2) and when going and others equipped with opportune magnets in its able to activate and desactivables ends, it will be made exact, just and chronometrically it links of both for the perfect discurrimiento by its interior of corresponding cables; the articulated sections of the poles also carried, to the aims of perfect confrontation and circulation by the interior of the tubes, of pertinent cables as well in its ends the corresponding able to activate and desactivables magnets; in the obverse of the sections of the articulated shovels the conductive tubes of extensor cable will be located (fig 7 8,9) semiamalgamated with the construction equipment of those of the shovel with consistent bridles and in the last external section of the shovel a roller will be located as well subject coiler on two strong billets with central oquedad to receive the roller axis and that this can make its circulatory movement coiler being this roller as well equipped with the corresponding magnet (fig. 710)

The subjection of the sections of shovels by reverso once extended and when giving them the sufficient force and maintenance of its rigidity when the shovel cuts the air, in its fort and fastest revolving movement, one will obtain by means of the positioning in the sections of shovel of pins type coal titmouse amalgamated with the construction equipment of the shovels and enroscadoras with double spiral and to inverse spiral (fig 7 a) b) c) g)), in the mentioned coals titmouse it penetrates the cable rigidity giver, the one that once has penetrated in all the pins guided in its trajectory through the conductive tube by the trail rope, automatically, the prensor of the trail rope opening coming off itself the cable rigidity giver and immediately the insuring pin will obturate the cable giver of rigidity to the aims to assure that fig is not going to slide nor to be given off (7 3 d)e) f)).

In order to avoid that the conductive tubes of cables of extended, collection and giver of rigidity to the articulated sections of the shovels, as well as the track through that the folded shovels will be moved, until the stations, within the vehicle, they could prevent the rotation of the ventral shading of the rotor head, thus they will be cut immediately over this head (fig 7 5,4b)) and equipped with pertinent able to activate and desactivables magnets, the rest of the sections of the mentioned tubes until the starter of the warehouse and the track until the stations of the shovels also folded will be cut immediately as well below the head of ventral shading of rotor (fig 7 12) with aims destined not to prevent the opportune turn and shading, this sections also will go equipped in their ends of corresponding conectables and desconectables magnets in order when the this head of shading in the suitable position and receives by radio control the order of launching of cables for reconversion in airship and previous consecutive connection of the action of magnets, the cut sections, with the opportune devices of extension they are possible to be fit just, exact and mathematically to make the function of reconversion and conversion, as well as the one of conduction of helicopter rotor blades folded(fig.7-4b, 5,I,2).

FIGURE 8. The systems for the more important practical accomplishment of the object of the patent that now is added, fold and joint of the poles of the Main rotor and the mechanisms of execution, they come determined by the existence from the conductive tubes of cables of extension and collection of the shovels, as well as of the giver of rigidity to such once extended (fig 8 3,4,7,8), the cables that after being gathered, coiled the extendedores and recogedores, estanqueados in the warehouse, arranged its end led next to the electronic tube trigger or thrower(fig 8 9,13,15,21), lead by means of the electronic order of radio control through its conductive tubes until reaching the roller coiler that tightens them or disconnects destensando them, in its case or for the conversion or reconversion of terrestrial vehicle in air vehicle; the cables givers of rigidity to the shovels as well will be arranged parallelly in their rigid condition cuasi vertically led the tube trigger to be sent according to the opportune order of radio control and to be equipped in their ends of the device of adhesion and the trail rope, whose totality also will be coiled next to cables givers of rigidity to shovels (fig 8 3,4,7,13,16,21).

The cañoncitos ready throwing triggers with corresponding led cables will be activated and put in operation by means of the opportune ones you order both of radio control ordered in the cabin of the vehicle by the conductive pilot and transmitted by means of central electronic and their corresponding secondary transmitters (fig 8-10,12,19,20).

The laser system for launching of optical messages along with the consecutive request hearing aids of which other vehicles leave a space of 35 meters, for takeoff and landing of the autocóptero, composing each emitting tube in color green orange and the words of the message like the device of the front crystal and the buttock of the vehicle for the messages of the takeoff that worked in extension of the laser beams central station, located in warehouse (fig 8 17) and (fig, 6 13,14).

In the section first of the tail To of the talent in addition to the watertight compartments that were described in the main patent of compartments for luggage and fuel, the talent will be equipped with another compartment for dedication to contain wounded stretchers for welcome of or victims supposing that the autocoptero is dedicated to the public service of rescue and rendering first aid or fast extreme ambulance (fig 8 23c). Between the tails To and B of the talent, two circular cockpits with the dimensions sufficient will be located to restore, respectively, in the a) wc, with embisagrado ceiling to provide ventilation and light, equipped with a sliding horizontal curtain, so that when the vehicle runs like terrestrial automobile, wc is not visible from outside (fig 8 2á), as well, in tail B, it will go located another cockpit, the b), in order to equip to the vehicle with a small operating room or a small room of you cure, for the medical attentions of urgency, when rescue autocópteros on watch public of and rendering first aid or fast ambulance are extreme and in case of private autocópteros the cockpit will be destined to a small living room or of playful relaxation or medicine kit.

FIGURE 9. The form to obtain that the height of the component blocks of the clutches is diminished, the axis of main rotor, assembled and the sujetador bridge of the establizador rotor shaft it will be obtained by means of the shrinking of the blocks by discurrimiento in pertinent tracks (fig 9 8, 10, 13) (fig 9 3, 4).

FIGURE 10. The form to obtain certain shortening in the tails of the talent will be obtained by means of the adoption of zingel retraibles and tensile in following form (fig 10- A. 1, A. 2) (fig 10-B.1,B.2)

### Claims

1. Automotion vehicle convertible in helicopter having two tails and provided with the configuration systems for its conversion, equipped either with a single ultralight internal combustion engine for the Automotion of the vehicle and for the operation the Rotor arrangement, or alternatively with two independent engines being one of them of the normal internal combustion type used for the Automotion of the vehicle and the other one being of the ultralight type for type operation of the Rotor Group,

   The vehicle being provided with systems for the Automotion, transmission, combustion, mechanical, centrifugal and frictional clutching, gearing and shifting elements for the conversion from automobile to helicopter or viceversa whereby the vehicle is also provided with:

   a) an automotive, propulsion and stabilisation Group when the vehicle has only one common engine for the automotive operation and the rotation of the Rotor Group, the engine being an ultra light motor with supercharged injection in cooperation with a thermal engine for increasing the engine power by converting thermal energy in mechanical energy, or alternatively an automotive, propulsion and stabilisation Group for the version comprising two independent motors, one of them being of the ultralight type for the operation of the Rotor Group and the other being a normal internal combustion engine for the auto motion of the vehicle.

b) a common transmission arrangement for the Rotor Group and for the deferential gear in the case of a single engine, or alternatively in the two engine version provided with two parallel transmission shafts, one transmitting power from the ultra light engine (M1) to the Rotor Group by means of a mechanical clutch, and the other transmitting power from the normal internal combustion engine (M2) to the auto motion system by means of a second mechanical clutch.

c) a combined, automatic, synchronised and sequential clutching system comprising a mechanical disc clutch, centrifugal clutch and frictional belt clutch.

d) gearbox comprising shifting gear arrangement for shifting from low speed to high-speed gears adapted to reduce rpm in order to provide the adequate ratio for the Rotor Group in the single engine version.

e) a mixed gas and semiconductor laser system for the provision of optical messages to other vehicles.

**Characterized in that**

The vehicle is provided with a Rotor shafts extension and retraction telescopic system being operable from the vehicle cockpit by radio control, the Rotor Group being provided with a Rotor blade folding and unfolding mechanism comprising hinges in the lower surface of the blades, the hinges being laminated to the blade material and the folding system comprising folding and unfolding cables and stiffener elements, the stiffener elements cooperating with receivers in the form of semi-circular channels attached to the blade, the receivers of consecutive blades teeing aligned face to face to permit for smooth sliding of the stiffener elements there through, the folding, unfolding and stiffening elements being operated from the interior of the vehicle structure by radio control

2. Automotion vehicle convertible and helicopter according to Claim 1 being single-Rotor triplicate in the alternative of a single motor and cuadripalico in the version of two motors, with system main Rotor totally articulated F.3 **characterized** substantially because the shovels themselves, as well they will be articulated by sections (31) with automatic system to along with assemble all the Rotor system in cockpit of the talent (32) (33) (35) and with autoensamblable the vertical axis also articulated in itself (3).

3. Automotion vehicle convertible an helicopter according to Claim 1 to be equipped with a single common motor for the automotion of the talent and the action and operation of the Rotor Group well, F.2 sexticilindrico ultralight motor of plumbed cylindrical opposition of short race, compound in symbiosis of thermal motor or normal explosion, autoalimentado of injection in front of the admission valve, in that four of their connecting rods presented displayed ample section and diameter maintained by wide bearings, pistons lightened with alloy of aluminium and valves of great section, due to its mechanical and functional symbiosis, two of their cylinders will be covered by a butt that will carry distribution valves, with in each cylinder a piston of alternating movement will move that will be transformed into circular movement by a articulated connecting rod in axis for the cylinder that will present display as well to the effect the crank; crank, "sui generis" that will assure with its double format the regulation the phases those cylinders, the rotation will govern the ignition functions, lubricated and leaked or air.

This motor will be of the system of injection in front of the supercharged valve of admission and with the opportune pumps of overfeeding, all it stops to increase the power specifies of the motor and to turn the thermal energy mechanical energy; or by two motors, one ultralight for the action and operation of the Rotor Group, and another thermal one or of normal explosion, for the action of vehicle. (M1) (M2).

4. Automotion vehicle convertible an helicopter according to Claim 1, by a transmission system that in the option of a single motor, it will be of common power shaft for the gear of the Rotor Group and for the gear of Differential F.2(9) (10) taking to this inserted tree endless screws, milled carving threads for the action and operation of the Rotor by means of automotive gear with which it will gear tangentially forming joint fit able and push out of positionable for when the talent has to work like aircraft or like terrestrial (1)(9)(10). This common tree or transmission will take as well encajador and desencajador tube of the comprehensive piece of the differential, being this curve-slide tube on the power shaft by means of mechanical device of collection and extension F.2(2)(3). The encajadora part of the tube will take piton in its fit able part superior in the reduced notch of the other end to aim that is fitted perfectly to drive the differential (4)(5). And the option of two motors. The transmission system will be of two power shafts, one for the Rotor Group that will go connected with ultralight motor M1 through the mechanical clutch (18) containing a homocinetica meeting composed by double universal joint ahead illegal delays or in the transmitted movement (14) endless thymes carved in filleted strawberry to drive by means of tangential gear with tear the Rotor system (9) and finish in subjection in the ground of the talent (17) since in this one action the second part of the tree that contains the encajador tube no longer will be necessary, since the differential will be driven in back traction by the motor of automotion of the M2 vehicle. The second power shaft (16) parallel to the one of the Rotor Group for action of the train of front wheels will be connected with the motor of Automotion of the M2 vehicle by means of the mechanical clutch (15) the motor of Automotion in addition through the pertinent devices will autopropulsara, by means of system of back traction the gear of the differential, also by hypoid gear.

5. Automotion vehicle convertible an helicopter according to Claim 1, by a system of mixed special clutch of mechanical disc clutch (15)(18). Centrifugal (19)(28) of friction (3)(26) of synchronous automatic consecutive operation, that in its part of disc clutch for full fillment of its double function of speed change of the vehicle in automotive version of terrestrial and fast super change of low speeds to overdrive, the disc will go mounted on the mandrill and it will move throughout the grooves of the primary axis that finishes in the ear that serves to lean in a veering of balls cantered on the main axis of the steering wheel, axis that takes inserted another accessory (24)(25) for the disengagement of the special device of the gear of the fast super step of speeds, taking to the steering wheel its asparagus with means around another central means, that this one special clutch tightens this one on the conductive plate the disc when driving it self slips does not harm the disengagement of the fast super step of speeds lowers to overdrive by imperative of the reduction of revolutions of motor for action and operation of the motor in the version of an only motor one, it must obtain, when it went to work the aircraft talent as the progresividad in acceleration and deceleration of the clutch by means of a second disc of consecutive alternative automatic operation by special device of connection and in whose second disc the means will have to have replaced by wharves of plastic material or melded rubber and by means of device of damping in the linings for which the second disc will slightly take bent teeth. The part of this one clutch of centrifugal character (19) for action and operation of the Rotor Group, it will be formed by a body in whose sine the shoes will lodge (28) compression by wharf that turns with the motor and when this it increases the speed, the centrifugal force moves the shoes towards outside making contact with enemy with the drum by means of the contact between the inner and outer parts of the same one by action of the pressure of the wharves. The clutch of friction or semiautomatic strap, whose beginning will carry out the motor when at originating speed and revolutions, simultaneously acted the effect of gear of reduction transmitting the power of the axis of the motor at the speed adapted by means of a series of disc of friction and strap to the Rotor (3)(26).

6. Automotion vehicle convertible an helicopter according to Claim 1, by the inclusion in the box of gears of a gear more, special of reduction so that the engine power is translated in greater speed and the revolutions of the motor they reduce to the revolutions that the Rotor in the proportion needs that was put of relief in the description of the system of transmission with automatic device, automated of additional special gear for a as well passes super express of speed a to overdrive, for when the talent had to work in version of aircraft can start up the heavy Rotor system and make stationary takeoff in with high angle of elevation and near obstacles; device that will act of the same form in opposite sense for passes super express of speed overdrive once advanced the Rotor system to the speeds a to aim that the motor turns to less revolutions obtaining the adaptation of the pertinent relation to the revolutions of the Rotor Group.

7. Automotion vehicle convertible and helicopter comprising autoensamblado mechanism of main Rotor shaft, according to the first Claim 1, **characterized by** a device of elevation and reduction of type by telescope driven for both positions by means of the pertinent ones you order of radio control. Attended form the control room of the vehicle, being each section of the axis equipped with piton fit able in the pertinent oquedad of the section in the retirement able box as well by means of the corresponding order of radio control skilled from the cabin of vehicle F.7(12).

8. Automotion vehicle convertible an helicopter comprising mechanism of extension and fold of the sections of the articulated shovels of the Main Rotor of the autocoptero according to the first Claim 1, and by the dowry and the part of the obverse of the sections of the shovels of the corresponding hinges adhered in semiamalgamamiento with the construction equipments of the shovels, screwed with double nut of inverse enrroscamiento, alternated by the part of reverse each two sections with the same characteristics of adhesion F.7(7).

9. Automotion vehicle convertible an helicopter according Claim 1, comprising mechanism of extension and fold of the sections of the shovels articulated of the main Rotor according the first claim beginning of the ventral beating not to prevent the rotator function of the such shading and will go as well equipped with the corresponding magnet and on tube to extend itself, it stop at its moment for going to face the section of the same tube that will have been left trim below the ventral shading as well, both sections attracted mutually by the force of magnets to separate once stop the force of attraction of the magnetic fields disconnecting magnets for the originating collection of articulated shovels, as one demonstrates all they F.7(5,8,9).

**10.** Automotion vehicle convertible an helicopter comprising mechanism for folding the sections of the articulated blades of the main Rotor, according to the first claim **characterised by** presenting on the reverse part of each blade the opportune sections of tube carrying the collector cable F.7(8,9) embedded semi-amalgamated with the material of the sections of the blades adhered in half-channel the grip reinforced with pins, each tube section maintaining a perfect millimetrically precise enfacement in its enfacement so that the collector cable runs on its interior without difficulty or impediment; the last tube section will present on its end extremity a duly cut curve to be able to bend, resting against and folding on the blade F.7(8,9), since this last section will not be amalgamated, but fixed with pins, however such pins will be amalgamated in securing for the tube, this section of the tube will have at the end of the corresponding part of the tube a magnet to facilitate when necessary the enfacement of these tube sections with the section adhered to the axle of the main Rotor which in turn will be cut at level of the height of the ventral flap of the main Rotor F.7(5) the section of which in turn on its extremity will be equipped with the pertinent magnet for the purpose of perfect confrontation with the section in tube of the last section of the blades and which the collector cable, when it is fired form the firing mechanisms, the guide cable can circulate in tube without any difficulty or impediment, the last section of the blade will also have adhered in the same form and manner the guide tube of the cable maintaining the rigidity of the blades in turn cut and equipped with the pertinent magnet for the purpose if perfect confrontation with the guide tube part of the cable maintaining the rigidity which finishes in the first blade section articulate exactly in the opening of the first bolt type pin in which the stiffening cable will penetrate, it will have the same reduced turning capability to adhere to and fold on the section of the articulate blade F.7(5bc) and will carry, also on its end, a clamp of terminal securing of the pertinent magnet which can be enabled and disabled. The tube carrying the blade stiffening cable will be cut in turn at the height of the beginning of the ventral beating not to prevent the rotator function.

**11.** Automotion vehicle convertible an helicopter comprising an mechanism of extension of the articulated sections of the main helicopter Rotor blades according to the first Claim 1, whirly to present display in the part of reverse of the sections of the articulated shovels the corresponding sections of the conductive tube of the mantenedor cable of rigidity in small canalisation semi amalgamated with the construction equipment of the shovels reinforced with the pertinent subjections with double spiral in atornillamiento in disposition of contrarroscas, these sections of the shovel it will go located a device coiler with revolving roller, fit to both sides, in two strong billets semi amalgamated with the construction equipment of the shovel, screwed of the same form and disposition that the conductive tubes. The roller coiler will go as well equipped with the pertinent magnet for attraction based on winding of the extendedor cable, once it is lead after opportunely trigger is shot from the warehouse of the vehicle by the opportune mechanism and reaches their contact with the roller coiler F.7(9,10)

**12.** Automotion vehicle convertible an helicopter comprising an mechanism of autoensamblado in the vehicle automobile of the articulated shovels folds of the Main Rotor, according to tracks located in reverse of it completes part of the shovels articulated and cut after a curvature to the height of the ventral shading and with another piece of track adhered for extension F.7(4b) and that continues once bran such shading until each one of the four places destined in the corresponding cockpits of the vehicle automobile, destined to lodge the folded shovels. Each part of the tracks takes a central canalisation with two wide eyelashes whose track an sliding fitted in the eyelashes of that the device runs that on the other hand to this end frontal, it takes the last articulated section of the gathered shovels whose sliding is made by means of the pertinent order skilled to the effect or by radio control form the cabin of vehicle F.7(4b) and F.6(5,12) and with corresponding extension F.7(4b).

**13.** Automotion vehicle convertible an helicopter comprising an mechanism for the extension and collection of the shovels you articulate of the main Rotor according to Claim 1, made through lead pertinent cables, through the corresponding tubes and of the cable giver of rigidity to the extended shovels and its tube, all conducted it from the warehouse of the vehicle. Pertinent the small tubes of the type of used for launching of the torpedoes and the missiles in the submarines and airplanes driven electronically by means of the pertinent ones you order attended to the effect by radio control F.8(3,5,7,16). The extendedores and recogedores cables will remain properly volutes with the end of right beginning to the mouth of the small pipe that when shooting them ended them at the conductive tubes once is attended the order of firing by means of radio control F.8(9,11,12,15). The mantenedores cables of rigidity of the extended shovels will remain embocados, perpendicularly and located in parallel. The section of the tube in the extension that in the mouth these cables require will be the joust so that properly fit they can be shot but in the section corresponding to the small angulatura underneath the corresponding sections first of the shovels in the maneuver of entrance slightly angulated the section of the conductive tube it will be hooked in the section that the perfect cable manoeuvre chooses, in any case this cable will be procured that, in spite of the function that it has to carry out of giver of rigidity to the shovels, be made of a material that without losing its hardness base it has despite some small possibility of slight flexibility, for example of massive brass and that form she is totally satisfactory its

## EP 1 512 625 B1

arrival until the pins type coal titmouse in which it must fit. These cables will represent as well, in its final base a embroider device and pushes out of position of its subsidiary trail rope the one that to if same will remain volute next to these mantenedores cables of rigidity by its benefit of function guides and at its moment of collection, for when the vehicles becomes automotive terrestrial, always entering operation, previous it activation by the pertinent order skilled by radio control from the control room F.8(21,22) and that shot electronically as mucho the mantenedor main cable of rigidity to the shovels as the subsidiary guide ends at respective conductive tubes F.8(13,14,21,22). All the orders of firing and cable conduction, transmitted from the cabin of then vehicle, as well they will be relayed through corresponding electronic controls F.8(10,20).

**14.** Automotion vehicle convertible an helicopter and comprising an mechanism of collection of helicopter Rotor blades stabilizing according to Claim 1, mechanically to push out of position the contenedora piece of these shovels electronic and of their axis, by radio order control and previous sliding by ready track in the tail (b) in its inferior tight part one will lodge between the tails (a) and (b) holds in its inner side by the pertinent groove of width and calibrated necessary made in the sujetadora piece of tails and on the other hand outer by a revolving sujetador of billet descended from the tail (a) it hols to viguilla booster of the tail and going to others reinforced by the corresponding clip F.8 (23,PR1,PR2,ki).

**15.** Automotion vehicle convertible an helicopter whereby in the tail (a) of the vehicles a cockpit for fulfilment of the social and economic aims of the invention of saving of time in displacements and improvement of the transport, as well as those of sanitary aid and person who renders first aid in its case according to the vindication first and according to this vindication first and according to this vindication, **characterized by** a new cockpit of capacity sufficient to lodge stretchers with a sliding lateral door, equipped with windows, cockpit designed for autocopteros of public rescue on watch in its case and the prevailed ones to locate a dormitory for displacement in trips that is had to spend the night in route F.8(23c).

**16.** Automotion vehicle convertible an helicopter according to Claim 1, for the fulfilment of the social aims and of sanitary aid of the invention dowry **characterized by** the existence between the shovels to and B, two circular cockpits, the b) with the installation of a small operating room, room of you cure and first aid and another one for fulfilment of the satisfaction of physical necessities of the occupants of the vehicle; the a) with the installation of wc, that it will arrange in its superior part of a sliding embisagrada cover to provide ventilation and light to this bath and that is not visible, its interior when it circulates like terrestrial automobile, of equal device and to such aims it will go equipped cockpit b). In the particular autocopteros cockpit b) can be used like small room of leisure and playful relaxation or equipment warehouse and medicine kit F.8(15a,b).

**17.** Automotion vehicle convertible an helicopter according claim 1, and comprising mechanism for reduction of levies and that can fit the Rotor bodies the assembles axis and sujetador bridge of the stabizing Rotor shaft, within the height of the housing and allowing the closed one of the inner doors and **characterizing by** small previous discurrimiento it pushes out of position by the tracks adhoc had in the ground the talent F.9(8,10,13), F.9(2,5,6,9), F.9 (3,4,11,12).

**18.** Automotion vehicle convertible an helicopter comprising device for slight shortening of the length of the talent by means of the adoption of zingel in both tails, according to Claim 1, and **characterized by** the addition of zingel recogedores extendedores in both tails gatherer F.10(A1,A2), spreader F.10(B1,B2).

**Patentansprüche**

**1.** Autobewegungswagen umwandelbar in Hubschrauber, der zwei Schwänze und versorgt(bereitgestellt) mit den Konfigurationssystemen für seine(ihre), Umwandlung, ausgestattet entweder mit einem einzelnen ultraleichten Verbrennungsmotoren für die Autobewegung des Wagens und für die Operation(Betrieb) der Rotor-Anordnung, oder wechselweise mit zwei unabhängigen Motoren hat, der einer von ihnen des normalen inneren Verbrennungstyps verwendet für die Autobewegung des Wagens und des anderen ist, der des ultraleichten Typs für die Operation (Betrieb) der Rotor-Gruppe ist.
Der Wagen, mit Systemen für die Autobewegung, Übersendung, Verbrennung, mechanisch, zentrifugal und Frictional-Packen, Getriebe und veränderliche Elemente für die Umwandlung von kraftfahzeug bis Hubschrauber, oder umgekehrt versorgt(bereitgestellt) zu werden, wodurch der Wagen auch damit versorgt(bereitgestellt) wird

a) Selbstbewegend, Antrieb und Stabilisierungsgruppe, wenn der Wagen nur einen allgemeinen Motor für die Automobiloperation(Automobilbetrieb), und die Umdrehung der Rotor-Gruppe, der Motor hat, der ein ultraleichter Motor mit Laderspritze in Mitarbeit mit einem thermischen Motor dafür ist, die Motorkraft um Umwandeln der Wärmeenergie in mechanischer Energie, oder wechselweise selbstbewegend, Antrieb und Stabilisierungsgruppe für die Version zu vergrößern, die zwei unabhängige Motoren, einer von ihnen einschließt, des ultraleichten Typs für die Operation(Betrieb) der Rotor-Gruppe und ander seiend, ein normaler Verbrennungsmotor für den Automaten des Wagens seiend.

b) Eine allgemeine Übersendungsanordnung für die Rotor-Gruppe und für das Differentialgetriebe im Fall eines einzelnen Motors, oder wechselweise in der zwei Motorversion versorgt(bereitgestellt) mit zwei Schäften des parallelen Getriebes, eins Sendekraft vom ultraleichteh Motor (M1) zur Rotor-Gruppe mittels einer mechanischen Kupplung, und der anderen Sendekraft vom normalen Verbrennungsmotoren (M2) zum Automationssystem mittels einer zweiten mechanischen Kupplung.

c) Ein vereinigtes, automatisches, synchronisiertes und folgendes Packen-System, das eine mechanische Scheibenkupplung, Fliehkraftkupplung und frictional Riemen-Kupplung einschließt.

d) Getriebe, das schaltende Anordnung dafür einschließt, mich von niedriger Geschwindigkeit bis Zahnräder der hohen Geschwindigkeit angepasst zu bewegen, um rpm zu reduzieren, um das adecuate Verhältnis für die Rotor-Gruppe in der einzelnen Motorversion zu versorgen(bereitzustellen), und

e) Ein Gasgemisch und Halbleiter-Lasersystem für die Bestimmung von optischen Nachrichten zu anderen Wagen.

Charakterisiert darin

Der Wagen wird mit Rotor-Schäften extention und Wiederziehen teleskopisches System versorgt(bereitgestellt), vom Wagen-Hahnenkampfplatz durch Funksteuerung, die Rotor-Gruppe durchführbar zu sein, mit einem Rotor-Blatt sich Taltender und sich entfaltender Mechanismus versorgt(bereitgestellt) zu werden, der Scharniere in der niedrigeren Oberfläche der Blätter, die Scharniere einschließt, zum Blatt-Material und dem Falte-System ausgewalzt zu werden, das sich faltende und sich entfaltende Kabel und Versteifungselemente, das Versteifungselement-Zusammenarbeiten mit Empfängern in der form halbkreisförmig einschließt

Kanäle beigefügt der niedrigeren Oberfläche des Blattes, die Empfänger, ausgewalzt und zum Blatt, die Empfänger in der form von halbkreisförmigen Kanälen beigefügt tiefer des Blattes, die Empfänger geschraubt zu werden, ausgewalzt und zum Blatt, die Empfänger von aufeinanderfolgenden Blättern geschraubt zu werden, ausgewalzt und zum Blatt, die Empfänger von aufeinanderfolgenden Blättern geschraubt zu werden, von Angesicht zu Angesicht ausgerichtet zu werden, um für glattes Schieben von stifener Elementen therethrough, die Falte zu erlauben, entfaltend und Elemente versteifend, vom Interieur der Wagen-Struktur durch Funksteuerung bedient zu werden.

**2.** Autobewegugswagen umwaudelbar in hubschrauber gemäb sie Anspruch 1 Kemzeichnen **gekennzeichnet** entsprechend der Rechtfertigung, die zuerst Einzeinrotor ist tripálico in der Alternative eines einzelnen Motors und des cuatripálico innen die Version von zwei Motoren, mit System Hauptgegliederter Feige des rotors total. 3. außerdem wird Cockpit des Talents durch Abschnitte (31) artikuliert mit dem automatischen System, zum des ganzes Rotorsystems zusammen mit EA zusammenzubauen (32) (33) (35) und mit autoensamblable die vertikale Mittellinie auch artikuliert in sich F.(3)

**3.** Autobewegugswagen umwaudelbar in hubschrauber gemäb sie Anspruch1 Kemzeichnen durch halten entsprechend Rechtfertigung mit einem einzelnen allgemeinen Motor für die Automotion von ausgerüstet werden Talent und die Tätigkeit und der Betrieb des Rotors gruppieren gut, F. 2 Motoren, sexticilindrico ultralight Motor der plombierten cilindrica Opposition von kurzes Rennen, Mittel in der Symbiose des thermischen Motors oder der normalen Explosion, autoalimentado der Einspritzung vor dem Aufnahmeventil, in dem vier ihrer Pleuelstangen presented/displayed reichlich Abschnitt und Durchmesser beibehalten durch breite Lager, Kolben erleichterten mit Legierung des Aluminiums und der Ventile des großen Abschnitts, wegen seiner mechanischen und Funktionssymbiose, innerhalb jedes Zylinders verschiebt ein Kolben der wechselnden Bewegung den wird in kreisförmige Bewegung durch ein gegliedertes Anschließen umgewandelt Stange in der Mittellinie des Zylinders, der present/display außerdem zu wird bewirken Sie die Kurbel; Kurbel, "sui generis", die mit seinem doppelten Format der Regelung versichern die Phasen jene Zylinder, geschmiert und von der Luft ausgelaufen.

Dieser Motor ist vom System der Einspritzung vor überkomprimiertes Ventil der Aufnahme und mit den günstigen Pumpen von Überfüttern; alles, das es stoppt, um die Energie zu erhöhen, spezifiziert vom Motor und sich zu drehen die mechanische Energie der thermischen Energie; oder durch zwei Motoren, ein ultralight für die Tätigkeit und den Betrieb der Rotor-Gruppe, und ein anderes thermisches oder der normalen Explosion, (M1)(M2)

**4.** Autobewegugswagen umwaudelbar in hubschrauber gemäb sie Anspruch1 Kemzeichnen durch halten entsprechend Rechtfertigung, durch ein Getriebesystem das in der Wahl eines einzelnen Motors, es ist von der allgemeinen Energie Welle für das Zahnrad der Rotor-Gruppe und für das Zahnrad der differentialen F. 2 (9) (10), nehmend zu diesem; setzte Schnecken des Baums ein, das geprägte Schnitzen verlegt für die Tätigkeit und den Betrieb des Rotors vorbei Mittel des Automobilzahnrades, mit denen es tangential sich bilden übersetzt gemeinsame fitable und schieben von positionable für hinaus, wenn das Talent muß arbeiten Sie wie Flugzeug oder mögen Sie terrestrisches (1) (9) (10). Dieser allgemeine Baum des Getriebes nimmt außerdem encajador und desencajador Schlauch des kompletten Stückes des Differentials, seiend dieses Kurve-schieben Sie Schlauch auf der Energie Welle mittels mechanischen Vorrichtung Ansammlung und Verlängerung der F 2

(3). Das encajadora Teil des Schlauches nimmt pitón in seinem fitable Teil Vorgesetzter in der verringerten Kerbe des anderen Endes zum Ziel, das gepaßt wird das differentiale (4) (5) tadellos fahren, Und die Wahl der zwei Bewegungsfeige. 2. Das Getriebesystem liegt bei zwei Energie Wellen, ein für die Rotor-Gruppe, die geht angeschlossen an den ultralight Motor M1, durch die mechanische Kupplung (18), die eine homocinetica Sitzung enthält bestanden durch die doppelte ungültige Universalverbindung voran verzögert oder in übertragene Bewegung (14) Schnecken schnitzten in ausgebeinter Erdbeere mittels des tangentialen Zahnrades mit Zahnrad das Rotorsystem (9) fahren und Ende in der Unterwerfung im Boden "des Talents (17) seit dem innen diese eine Tätigkeit das zweite Teil des Baums, der enthält encajador Schlauch nicht mehr ist notwendig, da das Differential in rückseitige Zugkraft durch den Motor von angetrieben Automotion des M2 Trägers. Die zweite Energie Welle (16) Ähnlichkeit bis die der Rotor-Gruppe für Tätigkeit des Zugs der vorderen Räder wird mit dem Motor angeschlossen von der Automotion des M2 Trägers, mittels der mechanischen Kupplung (15); der Motor von Automotion zusätzlich durch die passenden Vorrichtungen wird autopropulsará, mittels des Systems der rückseitigen Zugkraft das Zahnrad des Differentials, auch durch hipoide Zahnrad.

5.  Autobewegugswagen umwaudelbar in hubschrauber gemäb sie Anspruch 1 Kemzeichnen durch halten Gekennzeichnet entsprechend Rechtfertigung, Trommel der Zentrifuge (19) (28) von Friktion (3) (26) von synchronem automatischem nachfolgender Betrieb, das in seinem Teil der Scheibe Kupplung für Erfüllung seiner doppelten Funktion von der Geschwindigkeit Änderung des Trägers in der Automobilversion von terrestrischem und superfast Änderung der niedrigen Geschwindigkeiten am Schnellgang, die Scheibe geht angebracht am Dorn und sie bewegt gänzlich die Nuten der. Primärmittellinie, die im Ohr beendet, das dient sich in einem Lager der Kugeln zu lehnen zentrierte auf der Hauptmittellinie von Lenkrad, Mittellinie, die nimmt, setzte ein anderes zusätzliches (24) (25) für ein Befreiung der speziellen Vorrichtung des Zahnrades vom superfast Schritt von den Geschwindigkeiten zum Lenkrad seinen Spargel mit Mitteln nehmen um andere zentrale Mittel, daß sie dieses auf der leitenden Platte festziehen, die Scheibe, wenn sie diese ein spezielle Kupplung gleitet die Reibung sich fährt Gesicht des Lenkrades und das leitende Thema des Klatsches passend zu die unterschiedlichen Geschwindigkeiten von der Änderung des Trägers, um es und das zu vermeiden schädigt der Beleg nicht die Befreiung vom superfast senkt der Schritt von Geschwindigkeiten zum Schnellgang durch Befehl von die Verkleinerung von Revolutionen des Motors für.Tätigkeit und Betrieb von fahren Sie in der Version eines einzigen Motors einer, es muß erreichen, als es ging, das Flugzeugtalent als das progresividad innen zu bearbeiten Beschleunigung und Geschwindigkeitsverminderung der Kupplung mittels einer zweiten Scheibe vom nachfolgenden alternativen automatischen Betrieb durch spezielle Vorrichtung von Anschluß und in, wem zweite Scheibe die Mittel haben muß ersetzt durch wharves des Plastiks oder des geformten Gummi und durch Mittel von der Vorrichtung der Dämpfung in den Futtern, für die die zweite Scheibe wird etwas Nehmen verbogene Zähne. Das Teil dieser einer Kupplung des zentrifugalen Buchstabens (19) für Tätigkeit und Betrieb der Rotor-Gruppe, es wird von einem Körper gebildet in dessen Sinus die Schuhe (28) unterbringen Kompression durch Wharf, der mit dem Motor sich dreht und wenn dieses es erhöht die Geschwindigkeit, die Zentrifugalkraft verschiebt die Schuhe in Richtung zur Außenseite, die Kontakt bildet mit Feind mit der Trommel mittels des Kontaktes zwischen dem inneren und Außenstücke von dem gleichen durch Tätigkeit des Drucks der wharves.

Die Kupplung der Friktion oder des halbautomatischen Bügels, wer.Anfang den Motor wenn am Entstehen von von Geschwindigkeit durchführt und Revolutionen, fungierte gleichzeitig der Effekt des Zahnrades der Verkleinerung übertragend Energie der Mittellinie des Motors mit der Geschwindigkeit paßte sich mittels a an Reihe Scheiben der Friktion und des Rügels zum Rotor (3) (26).

6.  Autobewegugswagen umwaudelbar in hubschrauber gemäb sie Anspruch 1 Kemzeichnen durch halten entsprechend der Rechtfertigung durch die Einbeziehung im Kasten von den Zahnrädern eines Zahnrades mehr, speziell von der Verkleinerung, damit die Maschine Energie in grösserem übersetzt wird Geschwindigkeit und die Revolutionen des Motors, den sie auf den Revolutionen sich verringern daß der Rotor in den Anteil Notwendigkeiten, der von der Entlastung in gesetzt wurde Beschreibung des Systems des Getriebes mit Automaten, automatisiert vom zusätzlichen speziellen Zahnrad für à führt außerdem Super drücken Sie vom Geschwindigkeit ä zum Schnellgang aus, für, als das Talent in der Version des Flugzeuges arbeiten mußte, kann oben abfahren das schwere Rotorsystem und bilden stationären Start innen mit hohem Winkel vom Aufzug und von den nahen Hindernissen; Vorrichtung, die von der gleichen Form in der gegenüberliegenden Richtung für Durchläufe fungiert Super drücken Sie vom Geschwindigkeit Schnellgang vorrückte einmal das Rotorsystem zu aus beschleunigt á, à zum zu zielen, daß der Motor an weniger Revolutionen Erreichen wendet Anpassung der passenden Relation zu den Revolutionen des Rotors Gruppe.

**7.** Autobewegugswagen umwaudelbar in hubschrauber gemäb sie Anspruch1 Kemzeichnen durch halten Einheit der Hauptrotorwelle, entsprechend der ersten Rechtfertigung und entsprechend dem Geschenk Rechtfertigung **gekennzeichnet durch** eine Vorrichtung des Aufzugs und Verkleinerung von schreiben Sie **durch** das Teleskop, das für beide Positionen mittels des passenden gefahren wird eine Sie Auftrag der Radiosteuerung, beachtet vom Steuerraum des Trägers, jeder Abschnitt der Mittellinie sein ausgerüstet mit dem pitón fitable in passendes oquedad des Abschnitts im retirementable Kasten außerdem vorbei Mittel des entsprechenden Auftrages der Radiosteuerung erfahren von Kabine des Trägers F(12)

**8.** Autobewegugswagen umwaudelbar in hubschrauber gemäb sie Anspruch 1 Kemzeichnen durch halten Einheit der Verlängerung und Falte der Abschnitte von artikuliert Schaufeln des Hauptrotors des autocóptero, **gekennzeichnet** entsprechend der ersten Rechtfertigung und entsprechend anwesende Rechtfertigung durch den Dowry und das Teil des Obverse von Abschnitte der Schaufeln der entsprechenden Scharniere hafteten innen semiamalgamamiento mit den Baugeräten der Schaufeln, geschraubt mit doppelter Nuß des umgekehrten enroscamiento, durch das Teil von reverso jede zwei Abschnitte gewechselt mit demselben Eigenschaften der Adhäsion F(7)

**9.** Autobewegugswagen umwaudelbar in hubschrauber gemäb sie Anspruch1 Kemzeichnen durch halten Einheit der Verlängerung und Falte der Abschnitte der Schaufeln artikuliert vom Hauptrotor **gekennzeichnet** entsprechend dem Geschenk Rechtfertigung und entsprechend dem ersten Anfang vom ventralen Schlagen, zum der rotierenden Funktion des solchen Schattierens nicht zu verhindern und außerdem ausgerüstet mit dem geht das Entsprechen Magneten und auf Schlauch zu verlängern Sie sich, es stoppt in seinem. Moment, damit das Gehen den Abschnitt des gleichen Schlauches gegenüberstellt, der hat "Ordnung unterhalb ventralen außerdem schattieren gelassen, beide Abschnitte gegenseitig angezogen durch die Kraft der Magneten, um sich zu trennen stoppen Sie einmal die Kraft der Anziehung vom magnetischen auffängt das Trennen Magneten für die ents ehende Ansammlung der gegliederten Schaufeln, wie man, alle sie innen zeigt F.7(5,8,9)

**10.** Autobewegugswagen umwaudelbar in hubschrauber gemäb sie Anspruch1 Kemzeichnen durch halten Einheit der Falte der Abschnitte von den gegliederten Schaufeln von Hauptrotor, entsprechend der ersten Rechtfertigung und entsprechend dem Geschenk **gekennzeichnet**e Rechtfertigung zu present/display im Teil von reverso von jede Schaufel die günstigen Abschnitte des leitenden Schlauches von recogedor Kabel F. 7-(8,9) blockiert semiamalgamated mit dem Material der Abschnitte von den Schaufeln haftete im durchschnittlichen verstärkten Führung Nehmeneinfluß mit Stifte, jeden Abschnitt des Schlauches beibehalten sehr millimetrically genau ein vollkommenes confrontamiento in seinem confrontamiento, so dass vorbei Kabeltrasse sein Innenrecogedor- ohne keine Schwierigkeit noch zu blockieren; der letzte Abschnitt des Schlauchwillen present/display in seinem abschließenden Ende a encurvamiento schnitt richtig, um in der Lage zuSEIN, das Lehnen und das Falten zu verbiegen selbst auf Schaufel F. 7 (8, 9), da dieser letzte Abschnitt nicht amalgamiert wird; aber geregelt mit Stiften; dennoch solche Stifte, wenn sie in der Unterwerfung für amalgamiert werden der Schlauch, dieser Abschnitt des Schlauchwillen present/display am Ende von entsprechendes Teil des an seinem Moment zu erleichtern Schlauchmagneten, confrontamiento dieser Abschnitte des Schlauches mit dem Abschnitt haftete an die Hauptrotorwelle die, dessen außerdem auf Niveau gezählt wird die Höhe des ventralen Schattierens des Hauptrotors F (5), - wenn es von den Zündungzahnrädern geschossen wird, das Hinterseil kann unter Schlauch ohne keine Schwierigkeit verteilen noch vereinigt, auch der letzte Abschnitt der Schaufel hat in der gleichen Form gehaftet und Weise die Schlauchführer des mantenedor Kabels der Starrheit von Schaufeln schnitten außerdem und ausgerüstet mit dem entsprechenden Magneten zu Ziele der vollkommenen Konfrontation mit dem Teil des Schlauches es Führer von mantenedor Kabel der Starrheit das gerechte Ende im ersten Abschnitt von der Schaufel, die in der Öffnung des ersten Stiftes artikuliert wird, schreiben Sie Kohle Titmouse in, welchem es das mantenedor Kabel eindringt; es hat die gleiche Fähigkeit der kleinen Umdrehung, zum an abzulehnen und zu verbiegen der Abschnitt der gegliederten Schaufel, F. 7. (5bc) und tragen; auch in seinem Ende, ein Clip der TerminalUnterwerfung das passende fähige zu aktivieren und deactivateable Magnet. Der leitende Schlauch des Kabelgebers der Starrheit zu den Schaufeln wird seien außerdem zur Höhe des Schattierens geschnitten Sie.

**11.** Autobewegugswagen umwaudelbar in hubschrauber gemäb sie Anspruch 1 Kemzeichnen durch halten :
Einheit der Verlängerung der gegliederten Abschnitte von der Hauptleitung Hubschrauberläuferschaufeln entsprechend der ersten Rechtfertigung und entsprechend der GeschenkRechtfertigung **gekennzeichnet** zu present/display im Teil von reverso der Abschnitte der gegliederten Schaufeln entsprechende Abschnitte des leitenden Schlauches des mantenedor kabeln von der Starrheit im kleinen canalization semiamalgamated mit Baugeräte der Schaufeln verstärkt mit dem passenden Unterwerfungen mit doppelter Spirale im atornillamiento in der Einteilung von contrarroscas, diese Abschnitte des Schlauches gehen außerdem ausgerüstet mit Passendem Magneten. Im letzten gegliederten Abschnitt der Schaufel, die sie geht, lokalisierte a enrrollador Vorrichtung mit rotierender Rolle, Sitz zu beiden Seiten, in zwei starken Billets semiamalgamated mit den Baugeräten von der Schaufel geschraubt von der gleichen Form und von Einteilung die die leitenden Schläuche sobald es Leitung ist, nachdem günstig Auslöser vom Lager geschossen ist vom Träger durch die günstige Einheit und die Reichweiten ihr Kontakt mit der Rolle Wirbelmaschine F.(9,10).

**12.** Autobewegugswagen umwaudelbar in hubschrauber gemäb sie Anspruch1 Kemzeichnen durch halten:
Einheit von autoensamblado im Trägerautomobil von gegliederte Schaufelfalten des Hauptrotors, entsprechend der Rechtfertigung zuerst und entsprechend dem Geschenk die Rechtfertigung, die durch die Schienen gelegen sind im reverso von ihr **gekennzeichnet** wird, führt durch zerteilen Sie von den artikulierten Schaufeln und schneiden Sie nach einer Biegung zu Höhe des ventralen Schattierens und mit einem anderen Stück der Schiene haftete für Verlängerung, (Feige bestimmt die gefalteten Schaufeln unterbringen. Jedes Teil der Schienen nimmt ein zentrales canalization mit zwei breit dessen Schiene der Eyelashes und Schieben gepaßt in die Eyelashes von dem Vorrichtung läuft daß andererseits zu diesem Zweck Stirnseite, es nimmt den letzten gegliederten Abschnitt der erfaßten Schaufeln deren das Schieben wird mittels des passenden Auftrages gebildet, der zum Effekt erfahren ist oder durch Radiosteuerung von der Kabine des Trägers F:7 (4b) und (Feige 6 (5,12) und mit entsprechender Verlängerung (7 4b).

**13.** Autobewegugswagen umwaudelbar in hubschrauber gemäb sie Anspruch1 Kemzeichnen durch halten:
Einheit für die Verlängerung und die Ansammlung der Schaufeln Sie artikulieren Sie vom Hauptrotor entsprechend der Rechtfertigung zuerst und entsprechend der GeschenkRechtfertigung gebildet durch Leitung passend Kabel, durch die entsprechenden Schläuche und des Kabelgebers der Starrheit zu die ausgedehnten Schaufeln und sein Schlauch, alle leitete es vom Lager des passenden Trägers das kleine Schläuche der Art, Die extendedores und die recogedores Kabel bleiben richtig Spiralen mit dem Ende des rechten Anfanges zur Öffnung des kleinen cañoncito das, als das Schießen sie sie an den leitenden Schläuchen beendete, ist einmal soraten sich den Auftrag des Abfeuerns mittels der Radiosteuerung F. die 8,(9,11,12,15) mantenedores Kabel der Starrheit vom ausgedehnten Schaufeln bleiben embocados, senkrecht und gefunden in der Ähnlichkeit. Der Abschnitt des Schlauches in der Verlängerung die in der Öffnung diese Kabel erfordern sind das Zweikampf im Turnier, damit richtig gepaßt sie Schuß sein können aber im Abschnitt, der darunterliegend dem kleinen angulatura entspricht das Entsprechen unterteilt zuerst von den Schaufeln im Manöver von Eingang etwas angulada der Abschnitt des leitenden Schlauches, den er wird seien im Abschnitt, den das vollkommene Kabelmanöver wählt angespannt Sie, in jedem möglichem Fall wird dieses Kabel verschaffen, das, trotz der Funktion, die es vom Geber der Starrheit durchführen muß zu den Schaufeln seien von einem Material gebildet Sie, das, ohne seine Härteunterseite zu verlieren, hat sie trotz irgendeiner kleiner Möglichkeit der geringfügigen Flexibilität, z.B. vom massiven Messing und von dieser Form ist sie total zufriedenstellend seine Ankunft, bis die Stifte Kohle Titmouse schreiben, in den sie passen muß. für, wenn der Träger Automobilterrestrisches wird, immer hereinkommender Betrieb, vorhergehend seine Aktivierung durch den passenden Auftrag erfahren durch Radio Steuerung vom Steuerraum (F.8(21,22) F.8 und das schossen elektronisch so viel die mantenedor Hauptleitung Kabel der Starrheit zu den Schaufeln als dem Hilfsführer beendet an jeweilige leitende Schläuche (Feige -(13.14.21.22). Alle Sie Auftrag der Zündung und der Kabelübertragung, übertragen von der Kabine des Trägers, außerdem werden sie durch entsprechende elektronische Kontrollen neu gelegt (F. 8 10,20)

**14.** Autobewegugswagen umwaudelbar in hubschrauber gemäb sie Anspruch 1 Kemzeichnen durch halten:
Einheit der Ansammlung des Hubschrauberläuferschaufelstabilisierens entsprechend der Rechtfertigung zuerst und **gekennzeichnet** entsprechend anwesende von der Position hinauszuschieben Rechtfertigung mechanisch, contenedora Stück dieser Schaufeln elektronisch und ihrer Mittellinie, auf Befehl von Radiosteuerung und dem vorhergehenden Schieben durch bereite Schiene in Endstück (b) in seinem minderwertigen rechten Teil man bringt zwischen den Endstücken unter (a) und (b) hält in seiner inneren Seite durch die passende Nut der Breite und kalibriertes notwendiges gebildet im sujetadora Stück der Endstücke und an das andere die Hand, die durch ein rotierendes sujetador des Billets äußer ist, stieg von ab das Endstück (a), das es zum viguilla Verstärker des Endstücks und zum Gehen zu hält andere verstärkt durch entsprechenden Clip F. 8(23 PR1, PR2 k f) Q)

**15.** Autobewegugswagen umwaudelbar in hubschrauber gemäb sie Anspruch1 Kemzeichnen durch halten :
Im Endstück (a) des Trägers ein Cockpit für Erfüllung vom Sozial und ökonomische Ziele der Erfindung der Zeitersparnis in den Versetzungen und Verbesserung des Transportes, sowie die des gesundheitlichen Hilfsmittels und Person, die Erste ERSTE HILFE in seinem Fall entsprechend der Rechtfertigung überträgt zuerst und entsprechend dieser Rechtfertigung, **gekennzeichnet durch** ein neues Cockpit der Kapazität genügend Unterzubringen Bahre mit einer gleitenden seitlichen Tür, ausgerüstet mit Fenstern, Cockpit entwarf für autocópteros der allgemeinen Rettung auf Uhr in seinem Fall und die maßgeblichen, zum eines Schlafsaals für Versetzung innen zu lokalisieren Reisen, das die Nacht im Weg wird verbringen gemußt (F. 8 (23c).

16. Autobewegugswagen umwaudelbar in hubschrauber gemäb sie Anspruch 1 Kemzeichnen durch halten:
Entsprechend der Rechtfertigung und entsprechend der dieser Rechtfertigung für die Erfüllung der Sozialziele und des gesundheitlichen Hilfsmittels von Erfindung Dowry **gekennzeichnet durch** das Bestehen zwischen den Schaufeln zu und B, das B) mit der Installation eines kleinen funktionierenden Raumes, Raum von Ihnen kurieren und Erste ERSTE HILFE und eine andere für Erfüllung von Zufriedenheit der körperlichen Notwendigkeiten der Inhaber des Trägers; das A) mit der Installation von WC, daß es in seinem überlegenen ordnet, zerteilen Sie von einem gleitenden embisagrada die Abdeckung, zum von von Ventilation und von von Licht zu diesem Bad und zu dem bereitzustellen ist nicht sichtbar, sein Innere, wenn es wie terrestrisches Automobil verteilt, -von der gleichen Vorrichtung und zu solchen Zielen geht es ausgerüstetes Cockpit B). Im Einzelheit autocópteros Cockpit kann B) wie kleiner Raum verwendet werden von der Freizeit und playful Entspannung oder Ausrüstung lagern Sie und Medizin ein Installationssatz (F 8(15 zu, B).

17. Autobewegugswagen umwaudelbar in hubschrauber gemäb sie Anspruch1 Kemzeichnen durch halten:
Einheit für Verkleinerung der Niveaus und die kann die Rotorkörper Passen die zusammengebaute Mittellinie und sujetador Brücke des stabilisierenden Rotors Welle, innerhalb der Höhe des Gehäuses und des Erlaubens das geschlossene von innere Türen entsprechend der Rechtfertigung und dem Kennzeichnen durch kleines vorhergehendes discurrimiento, das es von der Position durch die Schienen Anzeige hinausschiebt hoc, hatte im Boden das Talent, F9(8.10, 13), und (F9-(2, 5. 6. 9), (F. 9(3, 4, 11, 12).

18. Autobewegugswagen umwaudelbar in hubschrauber gemäb sie Anspruch1 Kemzeichnen durch halten:
Vorrichtung für geringfügigen Shortening der Länge des Talents mittels die Annahme von zingel in beiden Endstükken, entsprechend der Rechtfertigung 1 a, und **gekennzeichnet** entsprechend dieser Rechtfertigung durch die Hinzufügung von zingel recogedores extendedores in beiden Endstücken F.(10-A.1,A.2) und F.(B.2).

## Revendications

1. Véhicule d'automouvement convertible dans hélicoptère ayant deux queues et fourni les systèmes de configuration pour sa conversion, équipée avec un moteur à combustion interne ultraléger simple pour l'automouvement du véhicule et pour l'opération de l'entente de rotor, ou alternativement avec deux moteurs indépendants étant un d'entre eux du type de combustion interne normal utilisé pour l'automouvement du véhicule et l'autre étant du type ultraléger pour l'opération du groupe de rotor.

a) Une automobile, la propulsion et le groupe stabilisation quand le véhicule a seulement un moteur commun pour l'opération automobile et la rotation du groupe de rotor, le moteur étant un moteur ultraléger avec l'injection surcomprimée en coopération avec un moteur thermal pour augmenter la capacité d'un moteur en convertissant l'énergie thermale dans l'énergie mécanique, ou alternativement une automobile, la propulsion et le groupe stabilisation pour la version comprenant deux moteurs indépendants, un d'entre eux étant du type ultraléger pour l'opération du groupe de rotor et l'autre étant un moteur à combustion interne normal pour l'automate du véhicule.
b) Une entente de transmission commune sur le groupe de rotor et sur le mécanisme différentiel dans le cas d'un moteur simple, ou alternativement dans la deux version de moteur fournie deux puits de transmission parallèles, un pouvoir(puissance) de transmission du moteur ultraléger (M1) au groupe de rotor au moyen d'une prise mécanique et l'autre pouvoir(puissance) de transmission du moteur à combustion interne normal (M2) au système d'automatisation au moyen d'une deuxième prise mécanique.
c) Un système saisissant combiné, automatique, synchronisé et séquentiel comprenant une prise de disque mécanique, prise centrifuge et prise de ceinture frictional.
d) La boîte de vitesse comprenant l'entente changeante de vitesse sur changer de la vitesse basse pour haut précipiter des mécanismes adaptés pour réduire le tr-min pour fournir la proportion adecuate pour le groupe de rotor dans la version simple de moteur et
e) Un gaz mélangé et un système de laser de semi-conducteur pour la disposition(fourniture) de messages optiques à d'autres véhicules.

Caractérisé dans cela:

On fournit le véhicule des puits de rotor extension et la rétraction le système télescopique étant fonctionnant de la cabine de véhicule par la radiocommande, le groupe de rotor étant fourni une lame de rotor le mécanisme se pliant et se déroulant comprenant des charnières dans la surface inférieure des lames, les charnières étant stratifiées au matériel de lame et le système de pliage comprenant le pliage et le dépliage de câbles et des éléments d'amidon, les éléments d'amidon coopérant avec des récepteurs en forme de canaux semi-circulaires attachés á la surface inférieure de la lame, les récepteurs étant stratifiés et vissés à la lame, les récepteurs étant stratifiés et vissés à la lame, les récepteurs de lames consécutives et stratifiées et vissées à la lame, les récepteurs de lames consécutives étant alignées face à face pour permettre pour le glissement lisse des éléments stipendier thermologie, le pliage, le dépliage et des éléments de raideur étant fonctionnés de l'intérieur de la structure de véhicule par la radiocommande.

2.  Véhicule d'auto-mouvément convertible dans hélicoptère accorde avec revendication 1 cette étant monorotor tripálico dans l'alternative d' n seul moteur et cuatripálico dans la version de deux moteurs. Caractérisé substantiellement parce que les pelles proprement ces, á son tour ils seront articulés par des sections (31) avec système automatique pour être rejoints avec tout le système rotor en habitáculo du talent (32) (33) (35) et avec l'axe vertical aussi articulé autoensamblable en lui-même F.(3)

3.  Véhicule d'auto-mouvement convertible dans hélicoptère accorde avec revendication 1 ad cette bien étant doté d'un seul moteur commun pour láutomotricite du talent et pour l'action et le fonctionnement du Groupe Rotor, F 2 (M$_1$) moteur ultraligero sexticilindrico d'opposition cylindrique aplomado de courte carrière mélange en symbiose de moteur thermique ou d'explosion normale, auto-entretenu d'injection devant la valve d'admission, dans lequel quatre de leurs bielles présenteraient de la vaste section et du diamètre soutenu par des larges coussinets, pistons allégés avec alliage aluminium et valves de grande section, étant donnée sa symbiose mécanique et fonctionnelle, deux de leurs cylindres seront couverts par un bout qui portera des valves de distribution, dans chaque cylindre un piston de mouvement alternatif se déplacera qui sera transformé en mouvement circulaire par une bielle articulée en axe du cylindre qui présentera à son tour la manivelle manivelle "sui generis," qui assurera avec son double format le règlement des phases de ces cylindres, la rotation régira les fonctions d'allumage, lubrificado et filtré d'air. Ce moteur du système d'injection devant la valve d'admission et sera suralimenté avec les opportunes bombes de suralimentation ; tout cela pour augmenter la puissance spécifique du moteur et pour transformer l'énergie thermique en énergie mécanique ; ou par deux moteurs, un ultraligero pour l'action et le fonctionnement du Groupe Rotor, et autre thermique ou d'explosion normale, pour l'action du véhicule FIG ; 1 (M$_1$) (M$_2$)

4.  Véhicule d'auto-mouvement convertible dans hélicoptère accorde avec revendication 1 ad selon cette:
    **Caractérisé par** un systeme de transmission qui dans l'option d'un seul moteur, il sera d'arbre de transmission commune pour le pignon du Groupe Rotor et pour le pignon de la Différentiel FIG. 2 (9) (10) en portant cet arbre inséré vis sans fin, sculpture moulue filetage pour l'action et le fonctionnement du rotor par roue découpée avec laquelle il adaptera tangentiellement en formant ensemble emboîtable et desencajable pour quand le talent aura dû fonctionner comme aeromóvil ou comme des véhicules à moteur terrestre (1) (9) (10). Cet arbre commun de transmission portera à son tour tube encajador et desencajador du morceau compréhensif de la différentiel, en étant ce tube deslizable sur l'arbre de transmission par dispositif mécanique récolte et extension FIG, 4 (2) (3). La partie encajadora du tube portera un pitón dans sa partie supérieure emboîtable dans l'entaille réduite de l'autre extrémité à fin qui est parfaitement installée pour entraîner la différentiel (4) (5), Et l'option de deux moteurs FIG. 2 Le système de transmission sera de deux arbres de transmission, un pour le Groupe Rotor qui ira en rapport avec le moteur ultraligero M1, à travers l'embrayage mécanique (18) en contenant une assemblée homocinétique composée de double rassemble cardent des retards ou en avant illégaux dans le mouvement transmis (14) des vis sans fin taillée en fraise désossée pour entraîner par pignon tangentiel avec roue découpée le système rotor (9) et elles termine en sujétion dans le sol "du talent (17) puisque dans celle-ci action la seconde partie de l'arbre qui contient le tube encajador ne sera déjà pas nécessaire, puisque la différentiel sera entraînée en traction arrière par le moteur d'automotricité du véhicule M2. Le second arbre de transmission (16) parallèle à celui du Groupe Rotor pour action du train à des roues avantages sera relié avec le moteur d'automotricité du véhicule M2, le moteur d'automotricité en outre à travers les dispositifs pertinents autopropulsará, par système de traction arrière le pignon de la différentiel, aussi par pignon hypoïde.

5.  Véhicule d'auto-mouvement convertible dans hélicoptère accorde avec revendication 1 ad selon cette:
    Caractérisé selon la, FIG 2, par un système d'embrayage spécial mixte d'embrayage mécanique de disque (15) (18). Centrifuge (19) (28) de friction (3) (26) de fonctionnement consécutif automatique synchronisé, que dans sa partie d'embrayage de disque pour accomplissement de sa double fonction de changement de vitesses du véhicule en version de des véhicules à moteur de terrestre et de changement superrapido de faibles vitesses à superdirecta, le disque sera monté sur le mandrin et il se déplacera le long des cannelures de l'axe primaire qui termine dans l'épi qu'il sert à être soutenu dans un coussinet de boules centré sur l'axe principal du volant, axe qu'il porte j'insère un autre accessoire (24) (25) pour le dégagement du dispositif, spécial du pignon du pas superrapido de vitesses, qui serrent celui-ci sur la plaque conductrice, le disque en étant entraîné celui-ci engage spécial glisse en frottant la face du volant et la soucoupe conductrice étant donné les différentes vitesses du changement du véhicule, pour l'éviter et à ce que le glissement ne nuit pas le dégagement du pas superrapido de vitesses il baisse superdirecta par impératif de la réduction de révolutions de moteur pour action et fonctionnement du moteur dans la version d'un seul moteur, il doit être obtenu, quand allait fonctionner le talent comme aeromóvil la progressivité en accélération et décélération de l'embrayage au moyen d'un second disque de fonctionnement automatique alternatif consécutif par dispositif spécial de connexion et sur le second disque duquel les ressorts devront avoir été remplacés par des quais dé matériel plastique ou caoutchouc moulé et par dispositif d'amortissement dans les doublures ce pourquoi le second disque portera des dents légèrement pliées. La partie de de celui-ci engage à caractère centrifuge (19) pour action et fonctionnement du Groupe Rotor, il sera formé par un corps dans le sein duquel se logeront les patins (28) compression par quai qui tourne avec le moteur et quand ce il augmentera la vitesse, la force centrifuge déplace les patins vers était pour faire contact avec le tambour par le contact entre les parties intérieures et extérieures de de ce dernier par action de la pression des quais.

L'embrayage de friction ou de courroie semi-automatique, dont la mise en marche effectuera le moteur quand vitesse et révolutions recevables, à la fois agi l'effet de pignon de réduction en transmettant la puissance de l'axe du moteur à la vitesse adéquate au moyen d'une série disques de friction et courroies au rotor (3) (26).

6. Véhicule d'auto-mouvement convertible dans hélicoptère accorde avec revendication 1 ad selon cette:
**Caractérisé par** l'inclusion dans la caisse de pignons d'un pignon de plus, spécial de réduction pour que la puissance du moteur soit traduite dans une plus grande vitesse et les révolutions du moteur ils soient réduits aux révolutions que spécifie le rotor dans la proportion qui a été soulignée dans la description du système de transmission avec dispositif automatique, automatisé à son tour de pignon spécial additionnel pour passez superbe rapide de vitesse à a à superdirecta, pour quand le talent aura dû fonctionner en version d'aeromóvil il puisse mettre en marche le système lourd rotor et effectuer décollage dans stationnaire avec important angle montée et obstacles proches ; dispositif qui agira la même manière en sens contraire pour passez superbe rapide de vitesse superdirecta une fois avancé le système rotor aux vitesses, à à fin que le moteur tourne a moins de révolutions en obtenant l'adaptation de la relation pertinente aux révolutions du Groupe Rotor.

7. Véhicule d'auto-mouvement convertible dans hélicoptère accorde avec revendication 1 ad selon cette avec:
-Mécanisme d'autoensamblado d'axe du rotor principal, conformément à la premiere revendication et selon la présente revendication **caractérisé par** un dispositif élévation et diminution de type téléscopique action pour les deux positions au moyen des pertinents ordres de radio- contrôle, suivies depuis la carlingue de commandes du véhicule, en étant chaque section de l'axe dotée d'un pitón emboîtable dans l'oquedad pertinente de la section dans la caisse retirable à son tour par le correspondant ordre de radio- contrôle suivi depuis la carlingue du véhicule (F. 7 (12).

8. Véhicule d'auto-mouvement convertible dans hélicoptère accorde avec revendication 1 ad selon cette avec:
-Mécanisme d'extension et plié des sections des pelles articulées du Rotor principal de ce qui est autocóptero, **caractérisé** conformément à la première revendication et selon la présente revendication par la dotation et la partie de l'anverso des sections des pelles des charnières correspondantes adhérées en semiamalgamamiento avec les matériels de construction des pelles, vissées avec double noix d'enroscamiento inverse, alternés par la partie de de ce qui est inverse chaque deux sections avec les mêmes caractéristiques d'adhésion F. 7 (7).

9. Véhicule d'auto-mouvement convertible dans hélicoptère accorde avec revendication 1 avec:
Mécanisme, pour plié et dévoilé des pelles articulées du Groupe Rotor et **caractérisé par** dotation d'un système spécial pour fournir de la rigidité et de la force aux sections des pelles une fois ces dernières dévoilées, au moyen de goupilles pénétrables dans hembrillas de forte amalgamation dans des soudures au matériel de base de la pelle, vissées avec double enrroscamiento à la Fig inverse. 7, 3 -- a) b) c). ni difficulté obstaculizante et avec dotation de goupille de clôture du câble donneur de force, une fois germée du câble il guide pour son retour au lieu de situation.

10. Véhicule d'auto-mouvement convertible dans hélicoptère accorde avec revendication 1 ad avec:
Mécanisme de de plié des sections des pelles articulées du Rotor principal, conformément à la première revendication et selon la présente revendication **caractérisé** pour présenter dans la partie de de ce qui est inverse de chaque pelle les opportunes sections de tube conducteur du câble ramasseur Fig. 8(8,9) encastrés amalgamation avec le matériel des sections des pelles adhérés dans une demi - carcasse renforcée le saisissez avec des goupilles, la dernière section de tube présentera dans son extrémité finale un encurvamiento dûment coupé pour pouvoir être plié en adosando et en étant plié sur la pelle Fig. 7 (8,9), puisque cette dernière section ne sera pas amalgamée ; mais fixée avec des goupilles ; toutefois de telles goupilles s'ils seront amalgamés en sujétion pour le tube, cette section du tube présentera à la fin de la partie correspondante du tube aimant pour faciliter en son temps le confrontamiento de ces sections de tube avec la section adhérée à l'axe du Rotor principal celle qui à son tour sera comptée au niveau de la hauteur du batimento ventral du Rotor principal Fig.(7 5) dont la section à son tour dans son extrémité sera doté de l'aimant pertinent pour confrontation parfaite avec la section en tube de la dernière section des pelles et qui le câble ramasseur à leur tour, quand il sera germé depuis les mécanismes de tir, le câble guide peut circuler sous tube sans aucune difficulté ni obstacle, aussi la dernière section de la pelle aura adhéré dans la même manière et manière le tube guide du câble champion de rigidité des pelles à son tour coupé et doté de l'aimant correspondant aux fins de confrontation parfaite avec la partie de tube il guide du câble champion de rigidité qui termine dans la première section de pelle articulé juste dans la bouche de la première goupille type cerrojillo dans laquelle il pénétrera le câble champion ; il aura la même faculté de petit virement pour nier et être plié sur la section de la pelle articulée F7(5bc) et portera ; aussi dans son extrémité, une agrafe de sujétion terminale l'aimant activable pertinent et desactivable. Le tube conducteur du câble donner de rigidité aux pelles sera coupé à son tour à la hauteur du batimento.

**11.** Véhicule d'auto-mouvement convertible dans hélicoptère accorde avec revendication 1 ad avec:
Mécanisme d'extension des sections articulées des pelles du Rotor principal conformément à la première revendication et selon la présente revendication **caractérisé** pour présenter dans la partie de de ce qui est inverse des sections des pelles articulées les sections correspondantes du tube conducteur du câble champion de rigidité dans petite canalisation amalgamation avec le matériel de construction des pelles renforcé avec les sujétions pertinentes avec une double spirale en atornillamiento en disposition de contrarroscas, ces sections de tube seront à son tour dotés des aimants pertinents. Dans la dernière section articulée de la pelle sera placé un dispositif enrrollador avec rouleau giratoire, encastrado aux deux côtés, dans deux forts billettes amalgamation avec le matériel de construction de la pelle, vissé la même manière et de la disposition que les tubes conducteurs. Le rouleau enrrollador sera à son tour doté de l'aimant pertinent pour attraction en fonction d'enrrollamiento du câble extendedor, une fois qu'ou conduit après qu'il est opportunement germé depuis l'entrepôt du véhicule par le mécanisme opportun déclencheur et atteint son contact avec le rouleau enrollador (Fig. 7 9, 10).

**12.** Véhicule d'auto-mouvement convertible dans hélicoptère accorde avec revendication 1 ad :
**caractérisé par** des voies situées dans ce qui est inverse de le il conclut une partie des pelles articulées et coupé après une courbure à la hauteur du batimento ventral et avec un autre morceau de voie adhéré pour extension Fig. 7(4b) et qui continue une fois sauvée une tel batimento jusqu'à chacun des quatre lieux destinés dans ce qui est correspondants habitàculos du véhicule automobile, destinés pour loger les pelles pliées. Chaque partie des voies porte une canalisation centrale avec deux élargis des cils par la voie duquel et en étant glissé installé dans les cils de de celle-là réfléchit le dispositif qu'à cet effet pour sa part frontal, il porte la dernière section articulée des pelles reprises dont le glissement est effectué par l'ordre suivi pertinent à ce propos ou par radio- contrôle depuis la carlingue du véhicule Fig. 7(1,4θ) y Fig. 6(5,12) et avec l'extension correspondante Fig. 7 4b).

**13.** Véhicule d'auto-mouvement convertible dans hélicoptère accorde revendication 1 avec:
Mécanisme pour l'extension et la récolte des pelles tu articules du Rotor principal selon la revendication première et conformément à la présente revendication effectué à travers les câbles pertinents conduits, à travers les tubes correspondant et le câble donneur de rigidité aux pelles étendues et leur tube, tout cela effectué depuis l'entrepôt du véhicule ceux petits canons pertinents du type, de de ceux utilisés pour lancement les torpedos et les missiles dans les sous-marins et les avions actions électroniquement au moyen des ordres pertinents suivies à ce propos par radio-contrôle Fig. 8(3,5,7,16). Les câbles extendedores et ramasseurs resteront dûment enroulés avec l'extrémité de début juste à la bouche de de ce qui est petit cañoncito qui en les germant les aboutirait les tubes conducteurs une fois qu'est suivi l'ordre de tir au moyen de radio- contrôle fig. les 8(9,11,12,15) câbles champions de rigidité des pelles étendues resteront embocados, perpendiculairement et situés en parallèle. La section du tube dans l'extension que dans la bouche requièrent ces câbles seront le juste pour que dûment adaptés ils puissent être germés mais dans la section correspondant à la petite angulatura sous les sections correspondantes première des pelles dans la manoeuvre d'entrée légèrement angulada la section du tube conducteur soit accrochée dans la section qui choisit la parfaite manoeuvre de câble, de toutes manières ce câble on essayera que, malgré la fonction qu'il doit effectuer de donneur de rigidité aux pelles, ou fabriqué d'un matériel que sans perdre sa dureté de base il a cependant une certaine petite possibilité de légère flexibilité, par exemple de laiton solide et de cette manière est totalement satisfaisante son arrivée jusqu'aux goupilles type cerrojillo dans lesquelles se il doit encastrar. Ces câbles représenteront à son tour, dans sa base finale un dispositif emboîtement et desencaje de son câble auxiliaire guide celui qui à à lui-même restera enroulé avec ces câbles des champions de rigidité par sa prestation de fonction guide et en son temps de récolte, pour quand le véhicule sera reconverti dans des véhicules à moteur terrestre, en entrant toujours en fonctionnement, préalable son activation par l'ordre pertinent suivi par radio-contrôle depuis la carlingue de commande Fig. 8 (21,22) et qui germés électroniquement tant le câble principal champion de rigidité aux pelles comme le guide auxiliaire aboutiront les tubes conducteurs respectifs (Fig. Tous les ordres tir et conduite de câbles, transmis depuis la carlingue du véhicule, à son tour ils seront retransmis à travers les contrôles électroniques correspondants Fig. 8 10,20).

**14.** Véhicule d'auto-mouvement convertible dans hélicoptère accorde revendication 1 ad avec:
Mécanisme de récolte de pelles du rotor stabilisateur conformément à la revendication première et **caractérisé** selon la présente revendication pour desencajar la pièce contenedora de ces pelles électroniquement et mécaniquement de leur axe, par ordre de radiocontrol et préalable glissement par voie disposée dans la colle (B) dans sa partie droite inférieure sujet dans son côté intérieur se logera entre les colles (A) et (B) par la pertinente cannelure de largeur et calibré nécessaire effectué dans la pièce sujetadora de colles et pour sa part extérieur par un sujetador giratoire de billette diminué de la colle (A) soumise à la viguilla reforzadora de la colle et en allant à à autres renforcé par l'agrafe correspondante Fig. 8(23 PR1, PR2 k f) Q.

**15.** Véhicule d'auto-mouvement convertible dans hélicoptère accorde avec revendication 1 ad:
Dans la colle (A) du véhicule un habitàculo pour accomplissement des fins sociales et économiques de l'invention d'économie de temps dans des déplacements et de l'amélioration de du transport ainsi que de ceux l'aide sanitaire et le secouriste le cas échéant conformément à la revendication première et selon cette revendication, **caractérisé par** un nouveau habitáculo de capacité suffisante pour loger camillas avec une porte latérale coulante, dotée de guichets, habitáculo conçu pour autocópteros de sauvetage de service public le cas échéant et dans ce qui est privés pour placer un dortoir pour déplacement dans des voyages qui doit se découcher en route Fig., 8-(23c).

**16.** Véhicule d'auto-mouvement convertible dans hélicoptère accorde revendication 1 ad:
l'accomplissement des fins sociales et de l'aide sanitaire de l'invention dotation **caractérisée par** l'existence entre les pelles A et B, deux habitáculos circulaires, salle de de prêtres et des premières aides et d'un autre pour accomplissement de la satisfaction de nécessités physiques des occupants du véhicule ; le a) Avec l'installation d'un wc, qui disposera dans sa partie supérieure d'une couverture embisagrada coulante pour fournir ventilation et lumière à ce bain et qui n'est pas visible, son intérieur quand il circulera comme automobile terrestre, de dispositif égal et aux mêmes fins sera doté le habitáculo b). Dans les particuliers autocópteros le habitáculo b) peut être utilisé comme petite salle loisir et dissémination ludique ou magasin équipements et boîte de secours Fig. 8(15 à, b).

**17.** Véhicule d'auto-mouvement convertible dans hélicoptère accorde revendication 1 ad avec:
Mécanisme pour réduction de hauteur et qui peuvent entrer les corps de rotor l'axe rejoint et le pont sujetador de l'axe du rotor stabilisateur, dans la hauteur de la carcasse et en permettant celui fermé des grandes portes conformément à la revendication le et **caractérisé par** discurrimiento préalable petit desencaje par les voies ad hoc, Fig. 9(8,10, 13), Fig.9-(2, 5, 6, 9), Fig. 9(3, 4,11,12).

**18.** Véhicule d'auto-mouvement convertible dans hélicoptère accorde revendication 1 ad avec:
l'addition de zingel ramasseurs extendedores dans les deux colles Fig. 10-(A.1,A.2) Fig. 10(B.1,B.2).

FIG._1

EP 1 512 625 B1

# FIG.2

28

EP 1 512 625 B1

# FIG.3

FIG.3 b

FIG 3 c

FIG.3 a

29

# F.I.G.4

FIG. 5

43
44
45
46
47
48
49
50
51
52
53
54
55
56
57
58
59
60

FIG.6

# FIG.7

FIg.8

fig 9

# FIG.10